# EUROPEAN PATENT APPLICATION

(11) **EP 4 814 593 A1**
(43) Date of publication of application: **30.09.2026**
(21) Application number: 25199564.3
(22) Date of filing: 02.09.2025
(51) Int. Cl.: G03G 15/00, B65H 45/30, H04N 1/00, G06F 3/12

(54) **INFORMATION PROCESSING SYSTEM AND PROGRAM**

(30) Priority: 25.03.2025 JP 2025050013; 25.03.2025 JP 2025050014
(71) Applicant: FUJIFILM Business Innovation Corp., Minato-ku Tokyo (JP)
(72) Inventor: YAMAUCHI, Kaoru, Yokohama-shi (JP)
(74) Representative: Haseltine Lake Kempner LLP

(57) **Abstract**

An information processing system includes a processor configured to acquire image information indicating an image of an image portion, the image being an image to be formed on a recording medium, the recording medium having a surface defining the image portion and a pressure adhesive toner layer, the recording medium being folded and pressure-bonded with the surface acting as a pressure-bonding surface or the surface of the recording medium acting as the pressure-bonding surface and being overlaid and pressure-bonded to another recording medium; and perform control to form the pressure adhesive toner layer on the pressure-bonding surface in an amount corresponding to a coverage amount of the image indicated by the acquired image information with respect to the pressure-bonding surface.

## Description

### Background

### (i) Technical Field

The present disclosure relates to an information processing system and a program.

### (ii) Related Art

Japanese Unexamined Patent Application Publication No. 2022-152378 discloses a printed material for reducing unevenness in pressure-bonding strength on a pressure-bonding surface.

The disclosed printed material includes a recording medium folded and pressure-bonded with a surface on which an image portion and a pressure-induced phase transition layer are formed acting as a pressure-bonding surface, or recording media overlaid on each other and pressure-bonded together with surfaces on each of which an image portion and a pressure-induced phase transition layer are formed acting as pressure-bonding surfaces. The average thickness of an area where the pressure-induced phase transition layer is formed on the image portion on the pressure-bonding surface of the recording medium is greater than the average thickness of an area where the pressure-induced phase transition layer is formed on a non-image portion on the pressure-bonding surface of the recording medium.

### Summary

However, the technique disclosed in Japanese Unexamined Patent Application Publication No. 2022-152378 does not take into account the entire coverage of the image portion on the pressure-bonding surface. Therefore, the disclosed technique may cause partially low-pressure-bonding-performance areas.

In addition, the technique disclosed in Japanese Unexamined Patent Application Publication No. 2022-152378 does not allow a user to determine the appropriateness of an image of the image portion.

Accordingly, it is an object of the present disclosure to provide an information processing system and a program that can provide further improved pressure-bonding performance on a pressure-bonding surface of a recording medium compared to a case where the coverage of an image with respect to the pressure-bonding surface is not taken into account.

It is an object of the present disclosure to provide an information processing system and a program that can determine the appropriateness of an image of an image portion more easily than in a case where coverage rate information is not presented.

According to a first aspect of the present disclosure, there is provided an information processing system including a processor configured to acquire image information indicating an image of an image portion, the image being an image to be formed on a recording medium, the recording medium having a surface defining the image portion and a pressure adhesive toner layer, the recording medium being folded and pressure-bonded with the surface acting as a pressure-bonding surface or the surface of the recording medium acting as the pressure-bonding surface and being overlaid and pressure-bonded to another recording medium; and perform control to form the pressure adhesive toner layer on the pressure-bonding surface in an amount corresponding to a coverage amount of the image indicated by the acquired image information with respect to the pressure-bonding surface.

According to a second aspect of the present disclosure, in the information processing system according to the first aspect, the processor is configured to perform control to form the pressure adhesive toner layer on the pressure-bonding surface such that an amount of the pressure adhesive toner layer increases as a coverage rate of the image with respect to the pressure-bonding surface increases.

According to a third aspect of the present disclosure, in the information processing system according to the second aspect, the processor is configured to prohibit execution of the control to form the pressure adhesive toner layer when the coverage rate is greater than or equal to a predetermined threshold.

According to a fourth aspect of the present disclosure, in the information processing system according to the third aspect, the predetermined threshold is 82%.

According to a fifth aspect of the present disclosure, in the information processing system according to any one of the second to fourth aspects, the processor is configured to apply, as the coverage rate, a coverage rate determined in accordance with an overlap of the image on the recording medium that is folded, in a case where the recording medium is folded and pressure-bonded with the surface acting as the pressure-bonding surface.

According to a sixth aspect of the present disclosure, in the information processing system according to any one of the second to fifth aspects, the processor is configured to derive the amount of the pressure adhesive toner layer in a stepwise manner such that the amount of the pressure adhesive toner layer increases as the coverage rate increases.

According to a seventh aspect of the present disclosure, in the information processing system according to any one of the second to fifth aspects, the processor is configured to derive the amount of the pressure adhesive toner layer in a stepless manner such that the amount of the pressure adhesive toner layer increases as the coverage rate increases.

According to an eighth aspect of the present disclosure, in the information processing system according to any one of the first to seventh aspects, the image is an image to be formed with toner.

According to a ninth aspect of the present disclosure, in the information processing system according to any one of the first to eighth aspects, the processor is configured to identify a folding position at which the recording medium is folded, using at least one of a region in which the image is to be formed, a position of a registration mark, and a position of a straight line on the recording medium, in a case where the recording medium is folded and pressure-bonded with the surface acting as the pressure-bonding surface.

According to a tenth aspect of the present disclosure, in the information processing system according to any one of the first to ninth aspects, the processor is configured to perform control to form an oblique stripe pattern using toner that is the same as the pressure adhesive toner layer within a range of a predetermined distance from an outer peripheral portion of the pressure-bonding surface.

According to an eleventh aspect of the present disclosure, in the information processing system according to the tenth aspect, the predetermined distance is 1.5 mm.

According to a twelfth aspect of the present disclosure, in the information processing system according to any one of the first to eleventh aspects, the image is a color image.

According to a thirteenth aspect of the present disclosure, there is provided a program causing a computer to execute a process for information processing, the process including acquiring image information indicating an image of an image portion, the image being an image to be formed on a recording medium, the recording medium having a surface defining the image portion and a pressure adhesive toner layer, the recording medium being folded and pressure-bonded with the surface acting as a pressure-bonding surface or the surface of the recording medium acting as the pressure-bonding surface and being overlaid and pressure-bonded to another recording medium; and performing control to form the pressure adhesive toner layer on the pressure-bonding surface in an amount corresponding to a coverage amount of the image indicated by the acquired image information with respect to the pressure-bonding surface.

According to a fourteenth aspect of the present disclosure, there is provided an information processing system including a processor configured to acquire image information indicating an image of an image portion, the image being an image to be formed on a recording medium, the recording medium having a surface defining the image portion and a pressure adhesive toner layer, the recording medium being folded and pressure-bonded with the surface acting as a pressure-bonding surface or the surface of the recording medium acting as the pressure-bonding surface and being overlaid and pressure-bonded to another recording medium; and present coverage rate information related to a coverage rate of the image indicated by the acquired image information with respect to the pressure-bonding surface.

According to a fifteenth aspect of the present disclosure, in the information processing system according to the fourteenth aspect, the processor is configured to apply, as the coverage rate, a coverage rate determined in accordance with an overlap of the image on the recording medium that is folded, in a case where the recording medium is folded and pressure-bonded with the surface acting as the pressure-bonding surface.

According to a sixteenth aspect of the present disclosure, in the information processing system according to the fifteenth aspect, the processor is configured to identify a folding position at which the recording medium is folded, using at least one of a region in which the image is to be formed, a position of a registration mark, and a position of a straight line on the recording medium.

According to a seventeenth aspect of the present disclosure, in the information processing system according to any one of the fourteenth to sixteenth aspects, the processor is configured to present the coverage rate as the coverage rate information.

According to an eighteenth aspect of the present disclosure, in the information processing system according to any one of the fourteenth to seventeenth aspects, the processor is configured to receive instruction information for providing an instruction to determine whether to fold and pressure-bond the recording medium with the surface acting as the pressure-bonding surface.

According to a nineteenth aspect of the present disclosure, in the information processing system according to any one of the fourteenth to eighteenth aspects, the processor is configured to change content of the coverage rate information depending on whether the coverage rate is greater than or equal to a threshold determined in advance.

According to a twentieth aspect of the present disclosure, in the information processing system according to the nineteenth aspect, when the coverage rate is greater than or equal to the threshold, the coverage rate information includes information indicating that the image has a problem, and when the coverage rate is less than the threshold, the coverage rate information includes information indicating that the image has no problem.

According to a twenty-first aspect of the present disclosure, in the information processing system according to any one of the fourteenth to twentieth aspects, the image is an image to be formed with toner.

According to a twenty-second aspect of the present disclosure, in the information processing system according to any one of the fourteenth to twenty-first aspects, the image is a color image.

According to a twenty-third aspect of the present disclosure, there is provided a program causing a computer to execute a process for information processing, the process including acquiring image information indicating an image of an image portion, the image being an image to be formed on a recording medium, the recording medium having a surface defining the image portion and a pressure adhesive toner layer, the recording medium being folded and pressure-bonded with the surface acting as a pressure-bonding surface or the surface of the recording medium acting as the pressure-bonding surface and being overlaid and pressure-bonded to another recording medium; and presenting coverage rate information related to a coverage rate of the image indicated by the acquired image information with respect to the pressure-bonding surface.

According to the first and thirteenth aspects of the present disclosure, it is possible to provide further improved pressure-bonding performance on a pressure-bonding surface of a recording medium compared to a case where the coverage of an image with respect to the pressure-bonding surface is not taken into account.

According to the second aspect of the present disclosure, it is possible to form a more appropriate amount of the pressure adhesive toner layer compared to a case where the coverage rate is not taken into account.

According to the third aspect of the present disclosure, it is possible to avoid the unnecessary formation of the pressure adhesive toner layer in advance.

According to the fourth aspect of the present disclosure, it is possible to avoid the unnecessary formation of the pressure adhesive toner layer in advance when the coverage rate is greater than or equal to 82%.

According to the fifth aspect of the present disclosure, it is possible to more appropriately form the pressure adhesive toner layer than in a case where the overlap of the image on the folded recording medium is not taken into account.

According to the sixth aspect of the present disclosure, it is possible to perform the control of forming the pressure adhesive toner layer more easily than in a case where the amount of the pressure adhesive toner layer is derived in a stepless manner.

According to the seventh aspect of the present disclosure, it is possible to perform the control of forming the pressure adhesive toner layer more accurately than in a case where the amount of the pressure adhesive toner layer is derived in a stepwise manner.

According to the eighth aspect of the present disclosure, it is possible to form the pressure adhesive toner layer on the pressure-bonding surface by using a function similar to a function of forming an image.

According to the ninth aspect of the present disclosure, it is possible to identify the position at which the recording medium is folded, by using information used in the related art.

According to the tenth aspect of the present disclosure, it is possible to prevent or reduce edge tearing caused by peeling apart of the printed surfaces of the printed material.

According to the eleventh aspect of the present disclosure, it is possible to more reliably prevent or reduce edge tearing than in a case where the predetermined distance is less than 1.5 mm, and it is possible to prevent or reduce the occurrence of a portion with excessively low pressure-bonding strength, making the printed material less likely to peel off from the edge, compared to a case where the predetermined distance exceeds 1.5 mm.

According to the twelfth aspect of the present disclosure, it is possible to obtain the effect of the technology of the present disclosure when forming a color image.

According to the fourteenth and twenty-third aspects of the present disclosure, it is possible to determine the appropriateness of an image of an image portion more easily than in a case where the coverage rate information is not presented.

According to the fifteenth aspect of the present disclosure, it is possible to apply a more appropriate coverage rate than in a case where the overlap of the image on the folded recording medium is not taken into account.

According to the sixteenth aspect of the present disclosure, it is possible to identify the position at which the recording medium is folded, by using information used in the related art.

According to the seventeenth aspect of the present disclosure, it is possible to help the user understand the coverage rate.

According to the eighteenth aspect of the present disclosure, it is possible to designate whether to create a printed material in which a recording medium is folded and pressure-bonded, in accordance with an instruction from the user.

According to the nineteenth aspect of the present disclosure, it is possible to present information corresponding to the coverage rate to the user.

According to the twentieth aspect of the present disclosure, it is possible to present appropriate information corresponding to the coverage rate to the user.

According to the twenty-first aspect of the present disclosure, it is possible to form the pressure adhesive toner layer on the pressure-bonding surface by using a function similar to a function of forming an image.

According to the twenty-second aspect of the present disclosure, it is possible to obtain the effect of the technology of the present disclosure when forming a color image.

### Brief Description of the Drawings

Exemplary embodiments of the present disclosure will be described in detail based on the following figures, wherein:
Fig. 1 is a schematic diagram illustrating an example configuration of an image forming system according to exemplary embodiments of the present disclosure;
Fig. 2 is a block diagram illustrating an example configuration of an electrical system of an information processing device according to the exemplary embodiments of the present disclosure;
Fig. 3 is a block diagram illustrating an example functional configuration of an information processing device according to a first exemplary embodiment of the present disclosure;
Fig. 4 is a diagram illustrating coverage rates according to the exemplary embodiments of the present disclosure;
Fig. 5 is a diagram illustrating the relationship between a coverage rate and a pressure-bonding strength of a pressure adhesive toner layer according to the exemplary embodiments of the present disclosure;
Fig. 6 is a schematic sectional view illustrating an example of an image and pressure adhesive toner on a post-treated recording medium subjected to the application of the pressure adhesive toner according to the exemplary embodiments of the present disclosure;
Fig. 7 is a schematic plan view illustrating an example of imposition, registration marks, solid lines, and broken lines according to the exemplary embodiments of the present disclosure;
Fig. 8 is a schematic plan view illustrating an example of an unfolded pressure-bonded printed material according to the exemplary embodiments of the present disclosure;
Fig. 9 is a schematic partial plan view illustrating an example of a pressure adhesive toner layer array pattern in an outer edge portion of the unfolded pressure-bonded printed material according to the exemplary embodiments of the present disclosure;
Fig. 10 is a schematic plan view illustrating an example of a non-image-forming area according to the exemplary embodiments of the present disclosure;
Fig. 11 is a schematic diagram illustrating an example configuration of a pressure adhesive toner amount database according to the exemplary embodiments of the present disclosure;
Fig. 12 is a flowchart illustrating an example procedure of information processing according to the first exemplary embodiment of the present disclosure;
Fig. 13 is a diagram illustrating an example of a pressure-bonded postcard printing confirmation screen according to the exemplary embodiments of the present disclosure;
Fig. 14 is a diagram illustrating an example of a first warning screen according to the exemplary embodiments of the present disclosure;
Fig. 15 is a diagram illustrating an example of a second warning screen according to the exemplary embodiments of the present disclosure;
Fig. 16 is a diagram illustrating an example of a first coverage information presentation screen according to the exemplary embodiments of the present disclosure;
Fig. 17 is a diagram illustrating an example of a second coverage information presentation screen according to the exemplary embodiments of the present disclosure;
Fig. 18 is a diagram illustrating an example of a conversion confirmation screen according to the exemplary embodiments of the present disclosure;
Fig. 19 is a diagram illustrating an example of a conversion type selection screen according to the exemplary embodiments of the present disclosure;
Fig. 20 is a block diagram illustrating an example functional configuration of an information processing device according to a second exemplary embodiment of the present disclosure;
Fig. 21 is a flowchart illustrating an example procedure of information processing according to the second exemplary embodiment of the present disclosure;
Fig. 22 is a diagram illustrating an example of a pressure adhesive toner amount adjustment screen according to the second exemplary embodiment of the present disclosure;
Fig. 23 is a diagram illustrating another example of the pressure adhesive toner amount adjustment screen according to the second exemplary embodiment of the present disclosure;
Fig. 24 is a diagram illustrating an example of a pressure adhesive toner plate according to an exemplary embodiment of the present disclosure; and
Fig. 25 is a diagram illustrating an example of a pressure adhesive toner mode transition confirmation screen according to an exemplary embodiment of the present disclosure.

### Detailed Description

The following describes exemplary embodiments of the present disclosure in detail with reference to the drawings. In the following description, an information processing system according to an exemplary embodiment of the present disclosure is applied to an image forming system configured to generate a pressure-bonded postcard.

### First Exemplary Embodiment

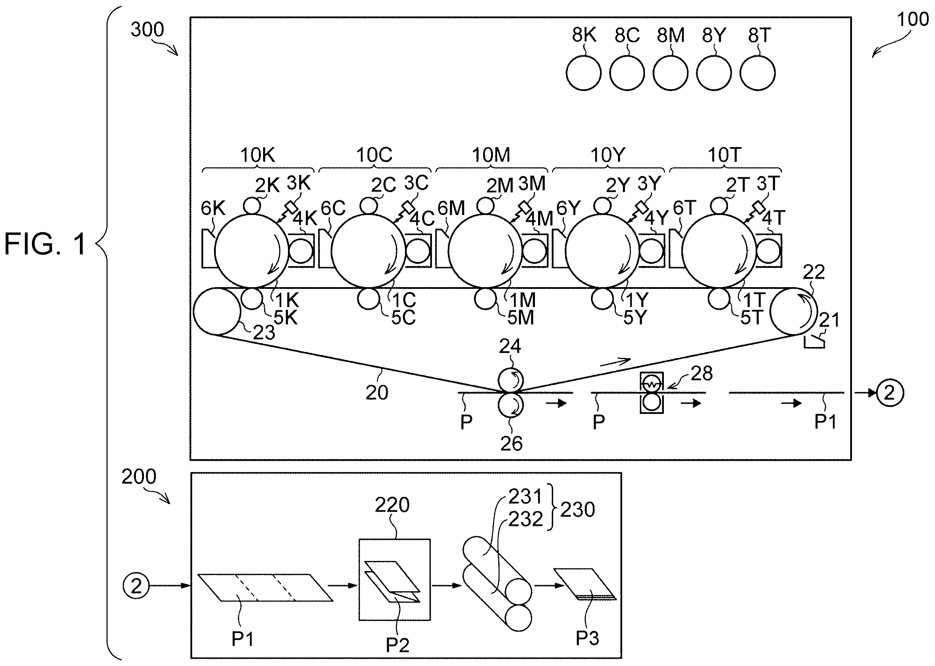

First, the configuration of an image forming system 100 according to a first exemplary embodiment of the present disclosure will be described with reference to Fig. 1. Fig. 1 is a schematic diagram illustrating an example configuration of the image forming system 100 according to the present exemplary embodiment.

As illustrated in Fig. 1, the image forming system 100 according to the present exemplary embodiment includes an image forming apparatus 300 and a pressure-bonding apparatus 200 disposed downstream of the image forming apparatus 300. The image forming apparatus 300 collectively forms an image portion and a pressure adhesive toner layer on a recording medium P. In Fig. 1, the arrow indicates a direction in which the recording medium P is transported.

The image forming apparatus 300 is configured to form color images, and is a five-unit tandem intermediate transfer printing means.

The image forming apparatus 300 includes a unit 10T that forms a pressure adhesive toner layer (T), and units 10Y, 10M, 10C, and 10K that form images of yellow (Y), magenta (M), cyan (C), and black (K), respectively. The unit 10T is a pressure adhesive toner layer forming unit that forms a pressure adhesive toner layer on the recording medium P using a developer containing pressure-induced phase transition particles (hereinafter referred to as "pressure adhesive toner"). Each of the units 10Y, 10M, 10C, and 10K is an image portion forming unit that forms a color image (i.e., an image portion) on the recording medium P using a developer containing color toner. The units 10T, 10Y, 10M, 10C, and 10K adopt an electrophotographic system.

The units 10T, 10Y, 10M, 10C, and 10K are horizontally spaced apart from each other. The units 10T, 10Y, 10M, 10C, and 10K may be process cartridges attachable to and detachable from the image forming apparatus 300.

An intermediate transfer belt 20 is provided below the units 10T, 10Y, 10M, 10C, and 10K so as to extend across the units 10T, 10Y, 10M, 10C, and 10K. The intermediate transfer belt 20 is wound around a drive roller 22, a support roller 23, and a counter roller 24, which are in contact with the inner surface of the intermediate transfer belt 20, and travels in a direction from the unit 10T to the unit 10K. An intermediate transfer member cleaning device 21 is provided on the image carrying side of the intermediate transfer belt 20 and faces the drive roller 22.

The units 10T, 10Y, 10M, 10C, and 10K include developing devices 4T, 4Y, 4M, 4C, and 4K, respectively. The developing devices 4T, 4Y, 4M, 4C, and 4K are supplied with the pressure adhesive toner, yellow toner, magenta toner, cyan toner, and black toner, which are contained in cartridges 8T, 8Y, 8M, 8C, and 8K, respectively.

Since the units 10T, 10Y, 10M, 10C, and 10K have the same configuration and operation, the unit 10T configured to apply the pressure adhesive toner onto a recording medium will be described as a representative.

The unit 10T includes a photoconductor 1T. The unit 10T further includes a charging roller 2T and an exposure device 3T around the photoconductor 1T. The charging roller 2T charges the surface of the photoconductor 1T. The exposure device 3T exposes the charged surface of the photoconductor 1T to a laser beam to form an electrostatic image. The unit 10T further includes a developing device 4T and a first transfer roller 5T around the photoconductor 1T. The developing device 4T supplies the pressure adhesive toner to the electrostatic image and develops the electrostatic image to form a pressure adhesive toner region. The first transfer roller 5T transfers the pressure adhesive toner region formed by developing the electrostatic image onto the intermediate transfer belt 20. The unit 10T further includes a photoconductor cleaning device 6T around the photoconductor 1T to remove the pressure adhesive toner remaining on the surface of the photoconductor 1T after the first transfer process. The first transfer roller 5T is disposed on the inner side of the intermediate transfer belt 20 and faces the photoconductor 1T.

An operation for applying the pressure adhesive toner and forming an image portion on the recording medium P will be described with reference to the operation of the unit 10T as an example.

First, the surface of the photoconductor 1T is charged by the charging roller 2T. The charged surface of the photoconductor 1T is irradiated with a laser beam from the exposure device 3T in accordance with image information transmitted from a control unit (not illustrated). Accordingly, an electrostatic image serving as a region where the pressure adhesive toner is to be applied is formed on the photoconductor 1T.

The electrostatic image formed on the photoconductor 1T rotates to a developing position in accordance with the rotation of the photoconductor 1T. At the developing position, the electrostatic image on the photoconductor 1T is developed by the developing device 4T to form a pressure adhesive toner region.

The developing device 4T accommodates a developer containing at least the pressure adhesive toner and the carrier. When stirred together with the carrier within the developing device 4T, the pressure adhesive toner is frictionally charged and carried on a developer roller. As the electrostatic image on the surface of the photoconductor 1T passes through the developing device 4T, the pressure adhesive toner electrostatically adheres to the electrostatic image on the surface of the photoconductor 1T, and the electrostatic image is developed with the pressure adhesive toner. As a result, the pressure adhesive toner region is formed. The photoconductor 1T with the pressure adhesive toner region formed thereon continuously rotates, and the pressure adhesive toner region formed on the photoconductor 1T is transported to a first transfer position.

When the pressure adhesive toner region on the photoconductor 1T is transported to the first transfer position, a first transfer bias is applied to the first transfer roller 5T, and an electrostatic force from the photoconductor 1T toward the first transfer roller 5T acts on the pressure adhesive toner region. Accordingly, the pressure adhesive toner region on the photoconductor 1T is transferred onto the intermediate transfer belt 20. The pressure adhesive toner remaining on the photoconductor 1T is removed and collected by the photoconductor cleaning device 6T. Examples of the photoconductor cleaning device 6T include a cleaning blade and a cleaning brush. The photoconductor cleaning device 6T may be a cleaning brush.

Each of the units 10Y, 10M, 10C, and 10K also performs an operation similar to that of the unit 10T using the developer containing the corresponding color toner. The intermediate transfer belt 20 onto which the pressure adhesive toner region has been transferred by the unit 10T sequentially passes through the units 10Y, 10M, 10C, and 10K, and the toner images of the respective colors are transferred onto the intermediate transfer belt 20 in a superimposed manner.

The intermediate transfer belt 20 with the pressure adhesive toner region and the four toner images transferred thereto in a superimposed manner through the units 10T, 10Y, 10M, 10C, and 10K reaches a second transfer unit including the counter roller 24 and a second transfer roller 26. On the other hand, the recording medium P is fed to a gap between the second transfer roller 26 and the counter roller 24 to come into contact with the intermediate transfer belt 20 through a feeding mechanism, and a second transfer bias is applied to the counter roller 24. At this time, an electrostatic force from the intermediate transfer belt 20 toward the recording medium P acts on the pressure adhesive toner region and the toner images, and the pressure adhesive toner region and the toner images on the intermediate transfer belt 20 are transferred onto the recording medium P.

The recording medium P with the pressure adhesive toner region and the toner images transferred thereto is transported to a heating device 28, which is an example of a fixing unit. When heated by the heating device 28, the color toner images are thermally fixed onto the recording medium P, and the pressure adhesive toner region is heated, which promotes plasticization of the pressure adhesive toner.

As described above, when the recording medium P passes through the image forming apparatus 300, an image portion is formed on the recording medium P, and the pressure adhesive toner is applied to the recording medium P. As a result, a post-treated recording medium P1 is produced.

Next, the post-treated recording medium P1 is transported toward the pressure-bonding apparatus 200. In the image forming system 100 according to the present exemplary embodiment, the image forming apparatus 300 and the pressure-bonding apparatus 200 may be in close proximity to each other or spaced apart. In a case where the image forming apparatus 300 and the pressure-bonding apparatus 200 are spaced apart, the image forming apparatus 300 and the pressure-bonding apparatus 200 are connected to each other by, for example, a transport unit (e.g., a belt conveyor) that transports the post-treated recording medium P1.

The pressure-bonding apparatus 200 includes a folding device 220 and a pressure device 230 for folding and pressure-bonding the post-treated recording medium P1.

The folding device 220 folds the post-treated recording medium P1 passing therethrough to produce a folded recording medium, or a multi-layered product P2.

In the folded recording medium (i.e., the multi-layered product), the pressure adhesive toner, which is applied by the image forming apparatus 300, adheres to at least a portion of at least one of the two opposing surfaces of the recording medium.

The pressure-bonding apparatus 200 may include, in place of the folding device 220, an overlaying device that places the post-treated recording medium P1 on top of another recording medium.

In the recording medium obtained by the overlaying device, that is, the multi-layered product, the pressure adhesive toner, which is applied by the image forming apparatus 300, adheres to at least a portion of at least one of the two opposing surfaces of the post-treated recording medium P1 and the other recording medium.

The multi-layered product P2 output from the folding device 220 (or the overlaying device) is transported toward the pressure device 230.

The pressure device 230 includes, for example, a pair of pressure members (i.e., pressure rollers 231 and 232). The pressure rollers 231 and 232 are spaced apart with, for example, a gap C therebetween, and allow the multi-layered product P2 to pass therebetween to apply pressure in the thickness direction of the multi-layered product P2. The pair of pressure members included in the pressure device 230 is not limited to a combination of pressure rollers, and may be a combination of a pressure roller and a pressure belt or a combination of pressure belts.

The pressure device 230 may or may not include therein a heating source (e.g., a halogen heater) for heating the multi-layered product P2. In a case where the pressure device 230 includes therein a heating source, the surface temperature of the multi-layered product P2 heated by the heating source is preferably greater than or equal to 30°C and less than or equal to 120°C, more preferably greater than or equal to 40°C and less than or equal to 100°C, and still more preferably greater than or equal to 50°C and less than or equal to 90°C. The absence of a heating source in the pressure device 230 does not rule out the possibility that the temperature inside the pressure device 230 could become greater than or equal to the environmental temperature due to heat generated by a motor or the like included in the pressure device 230.

When pressure is applied to the multi-layered product P2 passing through the pressure device 230, the folded surfaces of the multi-layered product P2 are fixed to each other by the fluidized pressure adhesive toner, and a pressure-bonded printed material P3 is produced.

The facing surfaces of the produced pressure-bonded printed material P3 are partially or entirely fixed to each other.

The completed pressure-bonded printed material P3 is output from the pressure device 230.

A first example of the pressure-bonded printed material P3 is a pressure-bonded printed material in which facing surfaces of a folded recording medium are fixed to each other by pressure adhesive toner. The pressure-bonded printed material P3 is manufactured by the image forming system 100 including the folding device 220.

A second example of the pressure-bonded printed material P3 is a pressure-bonded printed material in which facing surfaces of multiple recording media overlaid on one another are fixed to each other by pressure adhesive toner. The pressure-bonded printed material P3 is manufactured by the image forming system 100 including the overlaying device.

The image forming system 100 according to the present exemplary embodiment is not limited to an apparatus configured to continuously transport the multi-layered product P2 from the folding device 220 (or the overlaying device) to the pressure device 230.

The image forming system 100 according to the present exemplary embodiment may be an apparatus configured to store the multi-layered product P2 output from the folding device 220 (or the overlaying device) and, after the number of stored multi-layered products P2 reaches a predetermined value, transport the multi-layered products P2 to the pressure device 230.

In the image forming system 100 according to the present exemplary embodiment, the folding device 220 (or the overlaying device) and the pressure device 230 may be in close proximity to each other or spaced apart. In a case where the folding device 220 (or the overlaying device) and the pressure device 230 are spaced apart, the folding device 220 (or the overlaying device) and the pressure device 230 are connected to each other by, for example, a transport unit (e.g., a belt conveyor) that transports the multi-layered product P2.

The image forming system 100 according to the present exemplary embodiment is not limited to a sheet-fed apparatus. The image forming system 100 according to the present exemplary embodiment may be an apparatus of a type in which a long recording medium is subjected to a layout process and a pressure-bonding process to form a long pressure-bonded printed material, and then the long pressure-bonded printed material is cut into a predetermined size.

In Fig. 1, as a non-limiting example, the multi-layered product P2 is folded in a Z-shape by the folding device 220. For example, the multi-layered product P2 may be folded in a V-shape. In the following drawings, the use of V-shaped folding is illustrated for simplicity.

The image forming apparatus 300 and the pressure-bonding apparatus 200 according to the present exemplary embodiment are similar to those disclosed in Japanese Unexamined Patent Application Publication No. 2022-152378 filed by the present applicant. Thus, further description of the image forming apparatus 300 and the pressure-bonding apparatus 200 will be omitted.

The image forming apparatus 300 according to the present exemplary embodiment further includes an information processing device 50 (not illustrated in Fig. 1), which functions as a control device that controls each unit of the image forming apparatus 300.

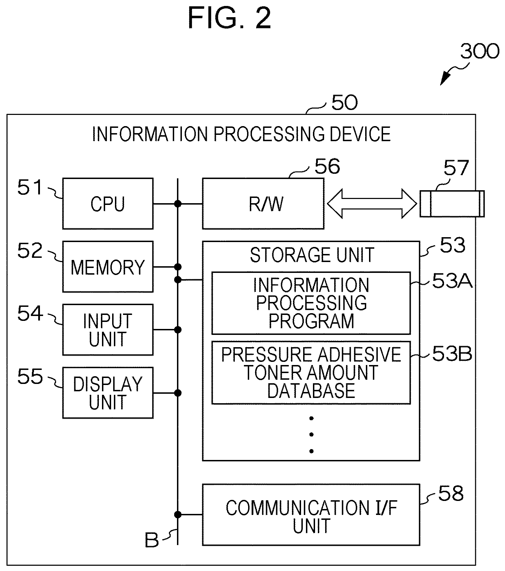

Next, the configuration of the information processing device 50 according to the present exemplary embodiment will be described with reference to Fig. 2. Fig. 2 is a block diagram illustrating an example configuration of an electrical system of the information processing device 50 according to the present exemplary embodiment.

As illustrated in Fig. 2, the information processing device 50 according to the present exemplary embodiment includes a central processing unit (CPU) 51 serving as a processor and a memory 52 serving as a temporary storage area. The information processing device 50 also includes a nonvolatile storage unit 53 and an input unit 54 including a touch panel and various switches. The information processing device 50 further includes a display unit 55 such as a liquid crystal display, a media read/write device (R/W) 56, and a communication interface (I/F) unit 58. The CPU 51, the memory 52, the storage unit 53, the input unit 54, the display unit 55, the media read/write device 56, and the communication I/F unit 58 are connected to each other via a bus B. The media read/write device 56 reads information from a recording medium 57 and writes information to the recording medium 57.

The storage unit 53 according to the present exemplary embodiment is implemented by, for example, a hard disk drive (HDD), a solid state drive (SSD), or a flash memory. The storage unit 53 serving as a storage medium stores an information processing program 53A. The information processing program 53A is stored (or installed) in the storage unit 53 when the recording medium 57 storing the information processing program 53Ais connected to the media read/write device 56 and the media read/write device 56 reads the information processing program 53A from the recording medium 57. The CPU 51 appropriately reads the information processing program 53A from the storage unit 53, loads the information processing program 53A into the memory 52, and sequentially executes processes included in the information processing program 53A.

The storage unit 53 according to the present exemplary embodiment further stores a pressure adhesive toner amount database 53B. The pressure adhesive toner amount database 53B will be described in detail below.

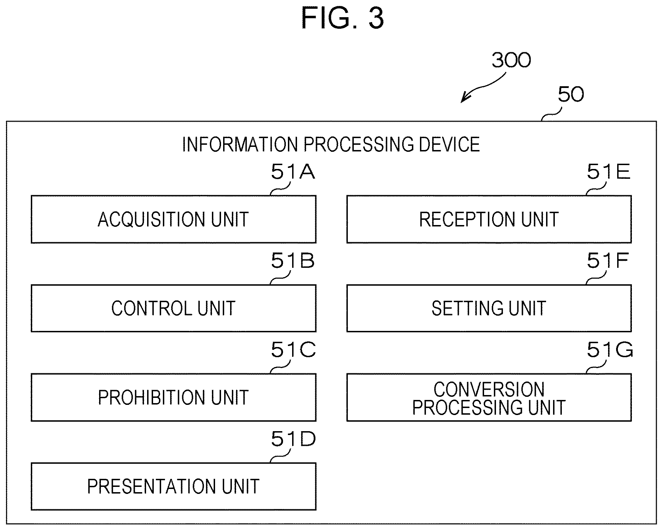

Next, the functional configuration of the information processing device 50 according to the present exemplary embodiment will be described with reference to Fig. 3. Fig. 3 is a block diagram illustrating an example functional configuration of the information processing device 50 according to the present exemplary embodiment.

As illustrated in Fig. 3, the information processing device 50 according to the present exemplary embodiment includes an acquisition unit 51A, a control unit 51B, a prohibition unit 51C, and a presentation unit 51D. The information processing device 50 according to the present exemplary embodiment further includes a reception unit 51E, a setting unit 51F, and a conversion processing unit 51G. When the CPU 51 of the information processing device 50 executes the information processing program 53A, the CPU 51 functions as the acquisition unit 51A, the control unit 51B, the prohibition unit 51C, the presentation unit 51D, the reception unit 51E, the setting unit 51F, and the conversion processing unit 51G.

The acquisition unit 51A according to the present exemplary embodiment acquires image information indicating an image of an image portion formed on the recording medium P. As described above, the recording medium P has a surface defining the image portion and the pressure adhesive toner layer, and is folded and pressure-bonded with the surface acting as a pressure-bonding surface (hereinafter simply referred to as a "pressure-bonding surface"). Alternatively, as described above, the recording medium P has a surface defining the image portion and the pressure adhesive toner layer, and the surface of the recording medium P acts as the pressure-bonding surface and is overlaid and pressure-bonded to another recording medium.

The control unit 51B according to the present exemplary embodiment performs control to form the pressure adhesive toner layer on the pressure-bonding surface in an amount corresponding to a coverage amount of an image indicated by the image information acquired by the acquisition unit 51A with respect to the pressure-bonding surface. In particular, the control unit 51B according to the present exemplary embodiment performs control to form the pressure adhesive toner layer on the pressure-bonding surface such that the amount of the pressure adhesive toner layer increases as the coverage rate of the image with respect to the pressure-bonding surface increases.

As described above, the control unit 51B according to the present exemplary embodiment uses the coverage rate as the coverage amount.

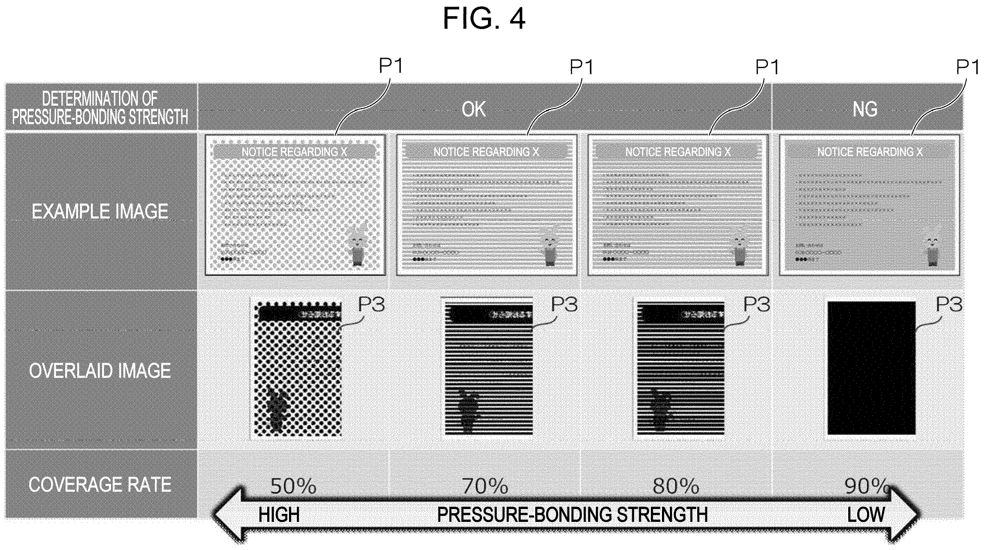

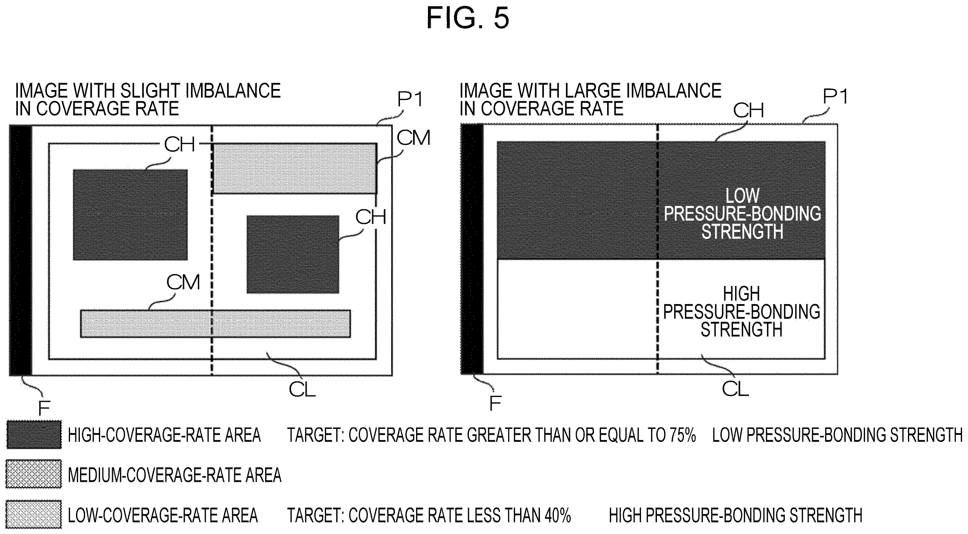

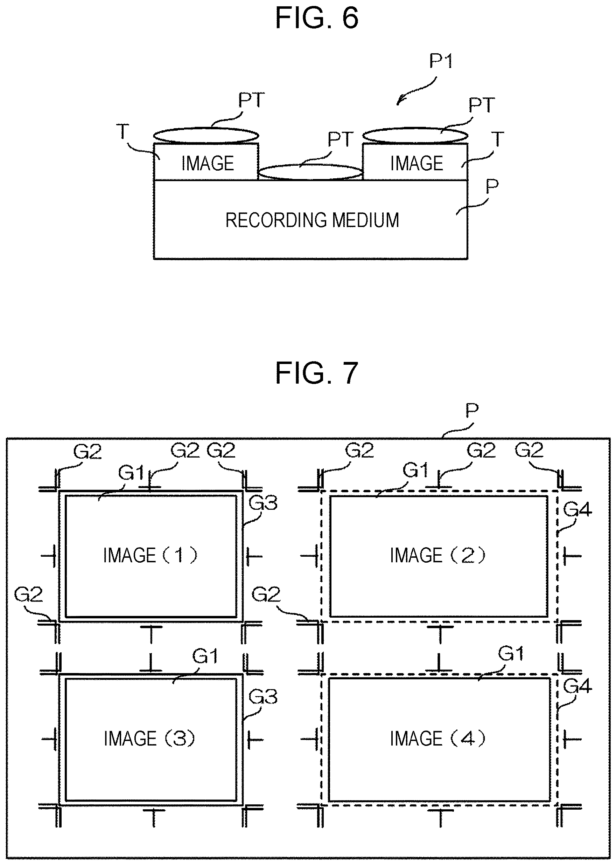

The coverage rate according to the present exemplary embodiment will now be described with reference to Figs. 4 to 6. Fig. 4 is a diagram illustrating coverage rates according to the present exemplary embodiment. In Fig. 4, the post-treated recording medium P1 is folded at the center in the left-right direction as a fold line to produce the pressure-bonded printed material P3. Fig. 5 is a diagram illustrating the relationship between a coverage rate and a pressure-bonding strength of a pressure adhesive toner layer according to the present exemplary embodiment. Fig. 6 is a schematic sectional view illustrating an example of an image and pressure adhesive toner PT on the post-treated recording medium P1 according to the present exemplary embodiment.

As illustrated in Fig. 4, in the present exemplary embodiment, the coverage rate is the ratio (expressed as a percentage) of the area of the toner regions of the Y, M, C, and K colors to the area of the surface of the pressure-bonded printed material P3 when the pressure-bonded printed material P3 is viewed from the surface in a case where the post-treated recording medium P1 is folded. In the present exemplary embodiment, accordingly, the coverage rate is set to a value corresponding to the overlap of the image on the folded recording medium P.

The example illustrated in Fig. 4 presents, as example images, images formed on the post-treated recording medium P1 depicted leftmost to the post-treated recording medium P1 depicted rightmost, with the pixel densities increasing step by step. Accordingly, in a case where the post-treated recording media P1 including the illustrated images are folded, the pixel densities also increase step by step in the same order. Thus, in the example illustrated in Fig. 4, the coverage rate also increases step by step from the pressure-bonded printed material P3 depicted leftmost to the pressure-bonded printed material P3 depicted rightmost.

In the present exemplary embodiment, as described above, a value in percentage is used as a non-limiting example of the coverage rate. For example, the ratio of the area of the toner regions of the respective colors to the area of the surface when the pressure-bonded printed material P3 is viewed from the surface may be used as the coverage rate.

In the image forming system 100 according to the present exemplary embodiment, matte-coated paper, which is a recording medium appropriate for pressure-bonding based on a pressure-bonded printed material, is used as the recording medium P used to produce the pressure-bonded printed material P3. In the image forming system 100 according to the present exemplary embodiment, furthermore, a pressure-bonded postcard, which is used for direct mail or the like, is used as the pressure-bonded printed material P3.

In contrast, as an example, as illustrated in Fig. 4, also when matte-coated paper is used as the recording medium P, as the coverage rate increases, the pressure-bonding strength of the pressure adhesive toner layer on the pressure-bonded printed material P3 decreases.

As a result of studies conducted by the present applicant, it has been found that unnecessary peeling of the pressure-bonded printed material P3 is likely to occur when the coverage rate of the pressure-bonded postcard becomes greater than or equal to 82%, which is not practical for mailing. In the example illustrated in Fig. 4, accordingly, the pressure-bonded printed material P3 depicted rightmost has a problem (marked "NG" in Fig. 4). The coverage rate of 82% described above is a value obtained by performing mailing tests with varying coverage rates in 1% increments.

Accordingly, as described above, the control unit 51B according to the present exemplary embodiment performs control to form the pressure adhesive toner layer on the pressure-bonding surface such that the amount of the pressure adhesive toner layer increases as the coverage rate increases.

As an example, Fig. 5 illustrates a post-treated recording medium P1 with substantially no imbalance in coverage rate (depicted in the left portion of Fig. 5), and a post-treated recording medium P1 with a large imbalance in coverage rate (depicted in the right portion of Fig. 5). In the post-treated recording medium P1 depicted in the left portion of Fig. 5, pairs of regions including a medium-coverage-rate area CM and a high-coverage-rate area CH are located at diagonal positions with respect to the pressure-bonding surface of the post-treated recording medium P1, resulting in a slight imbalance in coverage rate. In the post-treated recording medium P1 depicted in the right portion of Fig. 5, in contrast, the upper half of the pressure-bonding surface is occupied by a high-coverage-rate area CH, and the lower half of the pressure-bonding surface is occupied by a low-coverage-rate area CL, resulting in a large imbalance in coverage rate.

The pressure-bonded printed material P3 obtained from the post-treated recording medium P1 depicted in the right portion of Fig. 5 has low pressure-bonding strength in the upper half thereof, and unnecessary peeling is likely to occur. The pressure-bonding strength decreases as the coverage rate increases because, as an example, as illustrated in Fig. 6, toner T of an image serves as a cushion and pressure is less likely to be applied to the pressure adhesive toner PT. The post-treated recording medium P1 illustrated in Fig. 5 has a left edge portion F serving as a portion exposed to the outside and gripped by the user after the pressure-bonded printed material P3 is obtained.

Accordingly, in consideration of the imbalance in coverage rate, the control unit 51B according to the present exemplary embodiment divides the pressure-bonding surface of the post-treated recording medium P1 into multiple segmented regions (in the present exemplary embodiment, four regions obtained by dividing the pressure-bonding surface into two vertical sections and two horizontal sections). Then, the control unit 51B according to the present exemplary embodiment applies the maximum value among the respective coverage rates of the segmented regions to determine the amount of the pressure adhesive toner layer.

The prohibition unit 51C according to the present exemplary embodiment prohibits the control of forming the pressure adhesive toner layer when the coverage rate is greater than or equal to a threshold. The reason for this is to prevent wasteful production of a pressure-bonded printed material P3 for which unnecessary peeling is likely to occur.

As described above, considering that unnecessary peeling is likely to occur when the coverage rate becomes greater than or equal to 82%, the prohibition unit 51C according to the present exemplary embodiment sets the predetermined threshold to 82%. However, this is not limited thereto. For example, the threshold may be switched and applied in accordance with conditions such as the application of the pressure-bonded printed material P3 and the use environment of the pressure-bonded printed material P3. In another example, a user of the image forming system 100 may be prompted to set the threshold as appropriate through the input unit 54.

As described above, in a case where the recording medium P is folded and pressure-bonded with the surface defining the image portion and the pressure adhesive toner layer acting as the pressure-bonding surface, the control unit 51B according to the present exemplary embodiment applies, as the coverage rate, a coverage rate determined in accordance with the overlap of the image on the folded recording medium P.

Further, the control unit 51B according to the present exemplary embodiment derives the amount of the pressure adhesive toner layer in a stepwise manner such that the amount of the pressure adhesive toner layer increases as the coverage rate increases. In the present exemplary embodiment, the coverage rate is expressed in five levels, from 0% to 100%, in 20% increments, and the amount of the pressure adhesive toner layer is derived for each level. However, it is to be understood that the number of levels of the coverage rate is not limited to five.

As described above, in the present exemplary embodiment, the amount of the pressure adhesive toner layer is derived in a stepwise manner such that the amount of the pressure adhesive toner layer increases as the coverage rate increases. However, this is not limited thereto. For example, the amount of the pressure adhesive toner layer may be derived in a stepless manner so as to increase as the coverage rate increases.

In the derivation of the coverage rate in a case where the post-treated recording medium P1 is folded and pressure-bonded, it is desirable to accurately determine a position at which the post-treated recording medium P1 is folded. This position is hereinafter referred to as a "folding position"). Accordingly, in this case, the control unit 51B according to the present exemplary embodiment identifies the folding position using at least one of the region (imposition) in which an image is to be formed, the position of a registration mark, and the position of a straight line on each recording medium P.

Fig. 7 is a schematic plan view illustrating an example of imposition of images G1, registration marks G2, solid lines G3, and broken lines G4 according to the present exemplary embodiment. The solid lines G3 and the broken lines G4 each correspond to the straight line described above.

As an example, as illustrated in Fig. 7, image information indicating the images G1 to be formed on the recording medium P includes imposition information indicating regions where the images G1 are to be formed. The image information may also include at least one of the following information used to trim the post-treated recording medium P1: information indicating the registration marks G2, information indicating the solid lines G3, and information indicating the broken lines G4.

Accordingly, the control unit 51B according to the present exemplary embodiment identifies the folding position of the post-treated recording medium P1 using the information included in the image information.

Further, the control unit 51B according to the present exemplary embodiment performs control to form an oblique stripe pattern using the same pressure adhesive toner as that of the pressure adhesive toner layer within a range of a predetermined distance from the outer peripheral portion of the pressure-bonding surface of the recording medium P.

In the present exemplary embodiment, the predetermined distance is 1.5 mm. As compared with a case where the predetermined distance is less than 1.5 mm, edge tearing of the pressure-bonded printed material P3 may be less likely to occur. In addition, as compared with a case where the predetermined distance exceeds 1.5 mm, a portion with excessively low pressure-bonding strength may be less likely to occur, and the pressure-bonded printed material P3 may be less likely to peel off from the edge. The predetermined distance, which is set to 1.5 mm, is a value obtained by the present applicant through experiments, and is also a width sufficient to prevent it from being cut off in the trimming process even if printing is misaligned.

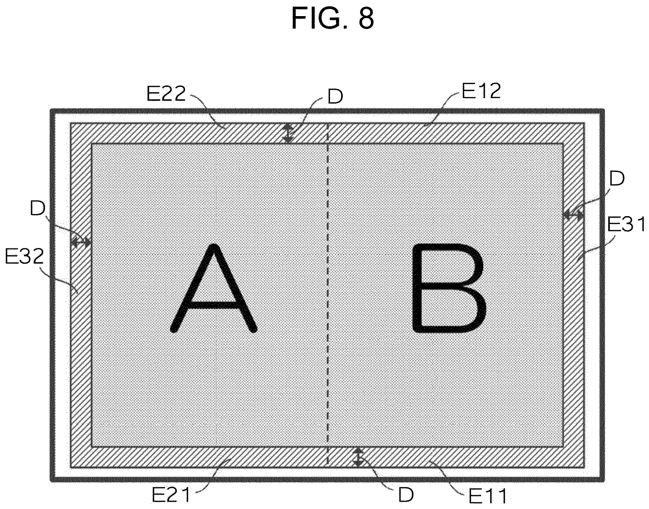

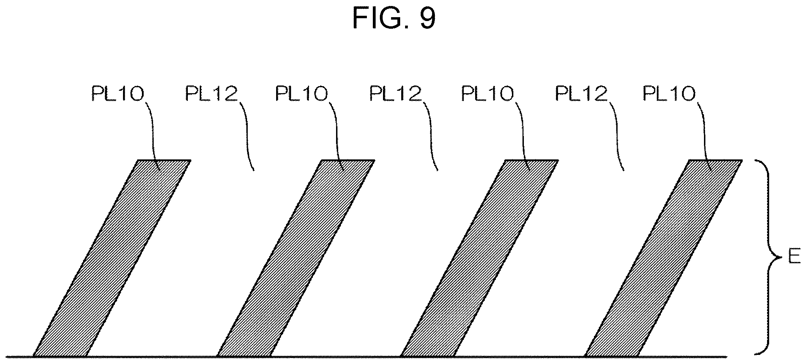

The oblique stripe pattern according to the present exemplary embodiment will now be described with reference to Figs. 8 and 9. Fig. 8 illustrates an example of an unfolded product obtained by unfolding the pressure-bonded printed material P3, which is folded in a V-shaped pattern and pressure-bonded, as an example.

The unfolded product illustrated in Fig. 8 has, on a front surface thereof, outer edge portions E11, E12, E21, E22, E31, and E32 as outer edge portions of the four sides of the pressure-bonding surface on a surface corresponding to the pressure-bonding surface of the unfolded product. In Fig. 8, a distance D from the edge of the pressure-bonding surface to the outer edge of the outer edge portions is defined as the predetermined distance described above. For example, the distance D is set to 1.5 mm. In the following, the outer edge portions E11, E12, E21, E22, E31, and E32 are individually referred to as the outer edge portion E and collectively referred to as the outer edge portions E unless otherwise distinguished from each other.

In Fig. 8, an area surrounded by a thick frame is the surface corresponding to the pressure-bonding surface of the unfolded product, and a broken line indicates a valley fold where the pressure-bonded printed material P3 is folded.

The oblique stripe pattern according to the present exemplary embodiment is formed in, as an example, the outer edge portions E of the unfolded product illustrated in Fig. 8 by, as an example, as illustrated in Fig. 9, arranging linear or strip-shaped pressure adhesive toner layers, with the pressure adhesive toner layers inclined with respect to the sides of the unfolded product and spaced apart along the sides of the unfolded product. In Fig. 9, reference numeral PL10 denotes the pressure adhesive toner layers, and reference numeral PL12 denotes regions where no pressure adhesive toner layers are formed.

Instead of the oblique stripe pattern, a pattern formed by arranging linear or strip-shaped pressure adhesive toner layers in a lattice shape may be applied, although not illustrated. Alternatively, instead of linear or strip-shaped pressure adhesive toner layers, dot-shaped pressure adhesive toner layers such as circular, elliptical, polygonal, or star-shaped pressure adhesive toner layers may be arranged.

However, the arrangement of linear or strip-shaped pressure adhesive toner layers is more preferable than the arrangement of dot-shaped pressure adhesive toner layers in terms of reduced occurrence of peeling of the printed material from the edge. This is because, on the facing pressure-bonding surfaces of the printed material, the pressure adhesive toner layers are easily brought into contact with each other, and an excessive decrease in pressure-bonding strength is less likely to occur.

The oblique stripe pattern according to the present exemplary embodiment is similar to that disclosed in Japanese Unexamined Patent Application Publication No. 2022-153340 filed by the present applicant. Thus, further description of the oblique stripe pattern will be omitted.

The presentation unit 51D according to the present exemplary embodiment presents coverage rate information related to the coverage rate of the image indicated by the image information acquired by the acquisition unit 51A with respect to the pressure-bonding surface.

The presentation unit 51D according to the present exemplary embodiment presents the coverage rate itself as the coverage rate information. However, this is not limited thereto. For example, at least one of a mark, a sign, and a text element determined in advance in accordance with the level of coverage rate may be presented as the coverage rate information.

The reception unit 51E according to the present exemplary embodiment receives instruction information for providing an instruction to determine whether to fold and pressure-bond the recording medium P with the surface defining the image portion and the pressure adhesive toner layer acting as the pressure-bonding surface.

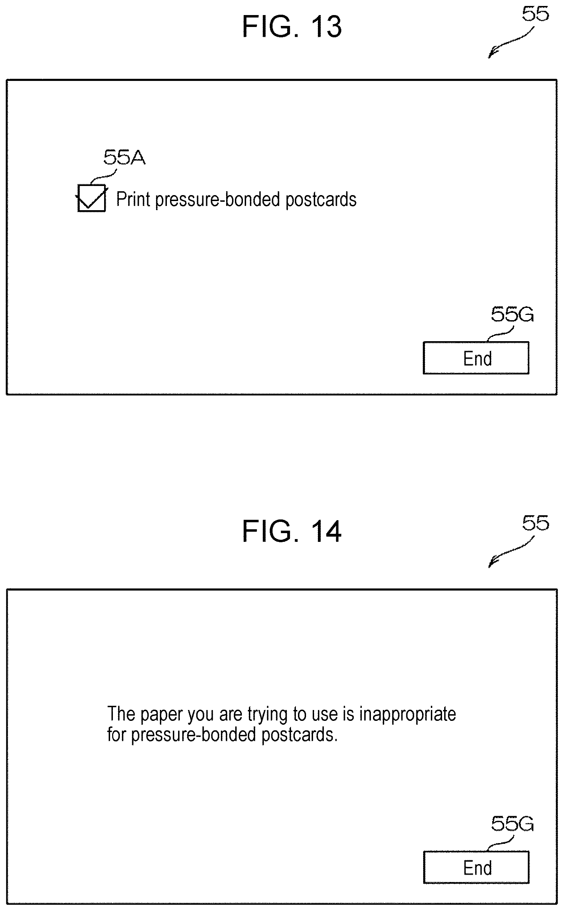

In the present exemplary embodiment, as an example, the reception unit 51E receives the instruction information through a pressure-bonded postcard printing confirmation screen illustrated in Fig. 13. However, this is not limited thereto. For example, the instruction information may be received via the user's voice.

The presentation unit 51D according to the present exemplary embodiment changes the content of the coverage rate information depending on whether the coverage rate is greater than or equal to a predetermined threshold (in the present exemplary embodiment, 82%). More specifically, when the coverage rate is greater than or equal to the threshold, the coverage rate information includes information indicating that the image has a problem. On the other hand, when the coverage rate is less than the threshold, the coverage rate information includes information indicating that the image has no problem.

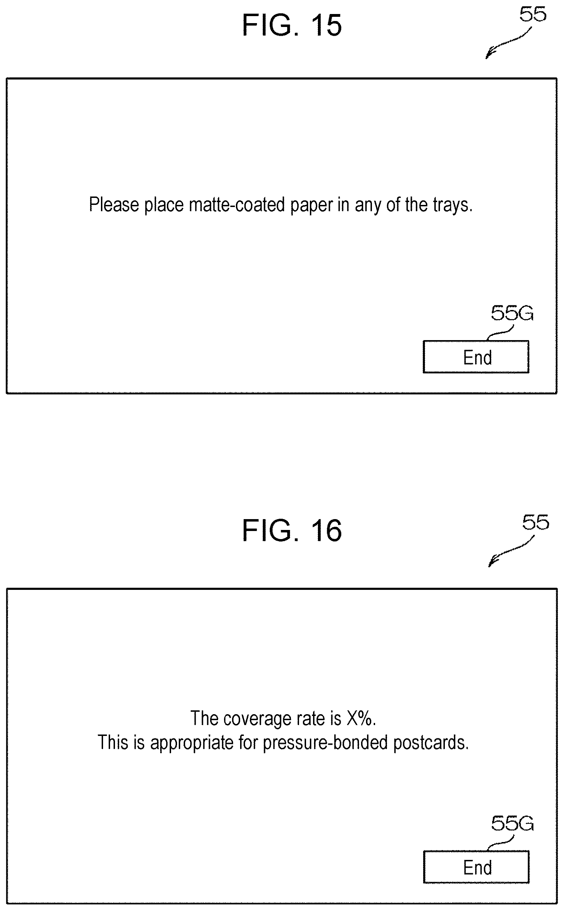

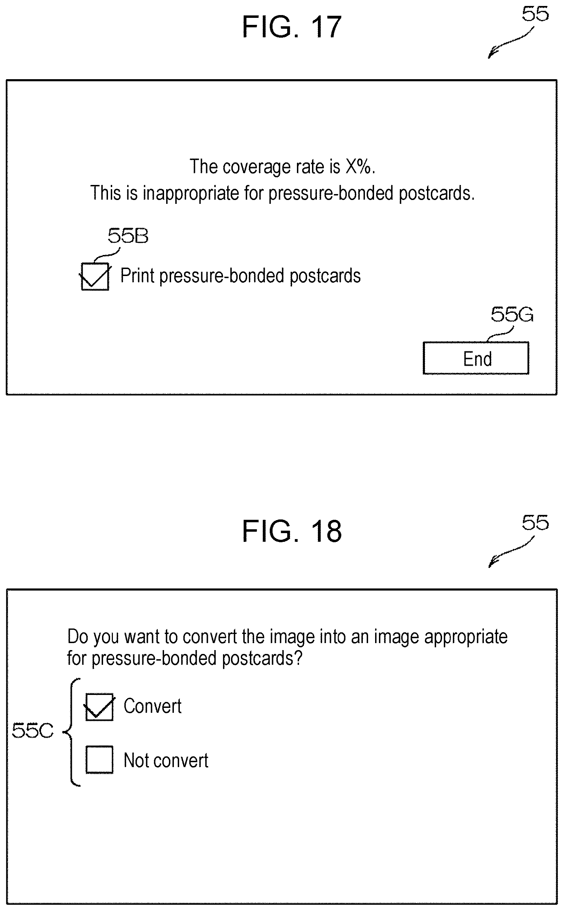

The presentation unit 51D according to the present exemplary embodiment presents the coverage rate information when the coverage rate is less than the threshold by, as an example, displaying a first coverage information presentation screen illustrated in Fig. 16. The presentation unit 51D according to the present exemplary embodiment presents the coverage rate information when the coverage rate is greater than or equal to the threshold by, as an example, displaying a second coverage information presentation screen illustrated in Fig. 17. However, it is to be understood that the content of the coverage information to be presented is not limited to that illustrated in Fig. 16 or 17.

On the other hand, the setting unit 51F according to the present exemplary embodiment sets a non-image-forming area in a range of a predetermined distance from at least one edge (in the present exemplary embodiment, all the edges) of the pressure-bonding surface of the recording medium P with respect to the image indicated by the image information acquired by the acquisition unit 51A.

The setting unit 51F according to the present exemplary embodiment determines whether to set the non-image-forming area using, as an example, the positions of the images G1 to be formed on the recording medium P illustrated in Fig. 7. In particular, the setting unit 51F according to the present exemplary embodiment determines whether to set the non-image-forming area using the positions of the images G1 to be formed on the recording medium P and the positions of the registration marks G2. Specifically, when the region where the images G1 are to be formed is included in an expected non-image-forming area, it is determined that the non-image-forming area is to be set.

Then, the setting unit 51F according to the present exemplary embodiment sets the non-image-forming area by performing at least one of a size reduction process and a trimming process on the image.

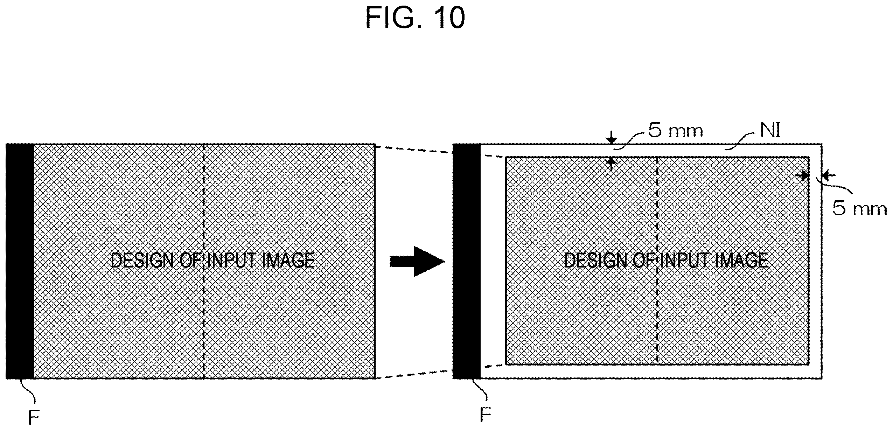

In the present exemplary embodiment, as an example, as illustrated in Fig. 10, the predetermined distance described above is 5 mm, which is a distance obtained in advance by the present applicant as a value that can withstand the stress to which pressure-bonded postcards are subjected when mailed. A distance of 5 mm is a value obtained by performing mailing tests with varying widths of a non-image-forming area NI in 1 mm increments. Fig. 10 is a schematic plan view illustrating an example of the non-image-forming area NI according to the present exemplary embodiment.

That is, in the present exemplary embodiment, the region where the image portion is to be actually formed on the pressure-bonding surface of the recording medium P is identified based on the positions of the images G1 to be formed on the recording medium P and the positions of the registration marks G2. Then, when the identified region where the image portion is to be formed is included in an area of 5 mm from the edge of the pressure-bonding surface of the recording medium P, at least one of the size reduction process and the trimming process is performed to convert the image so that the region is set as the non-image-forming area.

The acquisition unit 51A according to the present exemplary embodiment acquires not only the image information described above but also type information indicating the type of the recording medium P.

When the type of the recording medium P indicated by the type information acquired by the acquisition unit 51A is a type (in the present exemplary embodiment, any one of plain paper, coated paper, and high-quality paper) in which the pressure-bonding strength of the pressure adhesive toner layer is less than a predetermined lower limit threshold, the presentation unit 51D according to the present exemplary embodiment presents predetermined warning information (hereinafter referred to as "first warning information"). It is to be understood that matte-coated paper, which is used to produce a pressure-bonded postcard in the present exemplary embodiment, is a recording medium having a pressure-bonding strength greater than or equal to the lower limit threshold. However, the recording medium having a pressure-bonding strength greater than or equal to the lower limit threshold is not limited to matte-coated paper. It is to be understood that any recording medium other than matte-coated paper, such as matte poster paper, may be used as long as the recording medium has a pressure-bonding strength greater than or equal to the lower limit threshold.

The presentation unit 51D according to the present exemplary embodiment identifies the type of the recording medium P, based on the type of the recording medium P designated by the user.

However, this is not limited thereto. For example, the type of the recording medium P may be indirectly identified based on the user's designated accommodation unit (so-called tray) accommodating the recording medium P. Alternatively, the type of the recording medium P may be identified using the result of setting the type of an appropriate recording medium P for forming the image portion on the pressure-bonding surface. The function of setting the type of an appropriate recording medium P for forming the image portion on the pressure-bonding surface is a function that allows the image forming apparatus 300 to automatically set various kinds of information, and the type of the recording medium P is identified by using this function.

Alternatively, the type of the recording medium P may be identified using a detector capable of detecting the type of the recording medium P. The detector to be used may be a known media sensor. In this case, the detector may be installed in a location such as a location where the detector can directly detect the recording medium P accommodated in the accommodation unit or a location on a transport path from the accommodation unit to a position for forming an image on the recording medium P.

In some cases, no designation of the recording medium P is made, and the accommodation unit accommodating the recording medium P includes an accommodation unit accommodating recording media P of a type in which the pressure-bonding strength of the pressure adhesive toner layer is greater than or equal to the lower limit threshold. In such cases, the setting unit 51F according to the present exemplary embodiment sets the use of a recording medium P accommodated in that accommodation unit.

In other cases, no designation of the recording medium P is made, and the accommodation unit accommodating the recording medium P does not include an accommodation unit accommodating recording media P of a type in which the pressure-bonding strength of the pressure adhesive toner layer is greater than or equal to the lower limit threshold. In such cases, the presentation unit 51D according to the present exemplary embodiment presents predetermined second warning information.

In the present exemplary embodiment, the presentation unit 51D presents the first warning information by, as an example, displaying a first warning screen illustrated in Fig. 14. In the present exemplary embodiment, the presentation unit 51D presents the second warning information by, as an example, displaying a second warning screen illustrated in Fig. 15. However, this is not limited thereto. For example, the first warning information and the second warning information may be presented by sound generated by a sound generation device.

On the other hand, if the image indicated by the image information does not satisfy, for the image portion defined on the recording medium P, predetermined constraints for reducing peeling of the pressure-bonding surface, the conversion processing unit 51G according to the present exemplary embodiment performs a conversion process for converting the image information so that the constraints are satisfied. In the present exemplary embodiment, the constraints include a constraint related to pressure-bonded postcards.

In particular, in the present exemplary embodiment, the constraints include a condition indicating a non-image-forming area provided in the outer peripheral portion of the pressure-bonding surface, which is set by the setting unit 51F. In order to satisfy this condition, in the present exemplary embodiment, as described above, the conversion process includes at least one of the image size reduction process and the image trimming process.

In the present exemplary embodiment, as described above, the non-image-forming area is an area of 5 mm from the edge of the pressure-bonding surface of the recording medium P. Thus, in the present exemplary embodiment, the constraints include a condition that the area includes a non-image-forming area.

In the present exemplary embodiment, the constraints further include the condition indicating the coverage rate described above. In order to satisfy this condition, in the present exemplary embodiment, the conversion process includes at least one of a process for changing the user adjustment curve, a process for performing under color removal, and a process for changing the adjustment of the maximum density. Under color removal (UCR) is a process of eliminating equal amounts of cyan (C), magenta (M), and yellow (Y) that would have been added to a black portion and replacing them with black (K) during process color printing. As a result, gray components having a certain degree of density or more can be replaced with the black plate, resulting in a reduction in the overall amount of toner.

In the present exemplary embodiment, as described above, the coverage rate has an upper limit less than 82%. In the present exemplary embodiment, accordingly, the constraints include a condition that the coverage rate is less than 82%.

The process for changing the user adjustment curve is a process of adjusting a conversion curve of a conversion table prepared in advance for each of the C, M, Y, and K colors to convert the density of the image indicated by the image information. The process for performing under color removal is a process of changing the amounts of the C, M, and Y colors to be replaced with the K color. The process for changing the adjustment of the maximum density is a process of changing the adjustment amount of the maximum density of the image indicated by the image information.

That is, in the present exemplary embodiment, when the coverage rate is greater than or equal to 82%, at least one of the process for changing the user adjustment curve, the process for performing under color removal, and the process for changing the adjustment of the maximum density is executed so that the coverage rate becomes less than 82%.

In the present exemplary embodiment, the constraints further include a condition indicating the total amount of toner to be used to form the image portion on the pressure-bonding surface. In order to satisfy this condition, in the present exemplary embodiment, the conversion process includes a process for reducing the total amount of toner.

As used herein, the term "total amount" refers to the sum of the amounts of the C, M, Y, and K toners to be superimposed on one another to print an image. For example, when the amounts of the C, M, Y, and K toners are each 60%, the total amount of the overlapping solid portion is 240% (= 60 × 4).

However, as a result of studies conducted by the present applicant, it has been found that unnecessary peeling of the pressure-bonded printed material P3 is likely to occur when the total amount exceeds 240%, which is not practical. In the present exemplary embodiment, accordingly, the constraints include a condition that the total amount is less than or equal to 240%. In the present exemplary embodiment, when the total amount exceeds 240%, the maximum value of the density of the image to be formed by the image forming apparatus 300 is adjusted to lighten the color overall so that the total amount is not greater than 240%.

Here, the reception unit 51E according to the present exemplary embodiment receives information indicating whether to execute the conversion process from the user before the conversion process is executed. In particular, when the constraints are not satisfied, the reception unit 51E according to the present exemplary embodiment performs control to cause the display unit 55 to display a user interface screen for receiving, from the user, information indicating whether to execute the conversion process.

In the present exemplary embodiment, the user interface screen for receiving, from the user, information indicating whether to execute the conversion process is a conversion confirmation screen illustrated in Fig. 18, as an example. However, it is to be understood that the user interface screen is not limited to the conversion confirmation screen illustrated in Fig. 18. In addition, the reception unit 51E may receive information indicating whether to execute the conversion process using any method other than a display screen. For example, the reception unit 51E may receive information indicating whether to execute the conversion process via the user's voice.

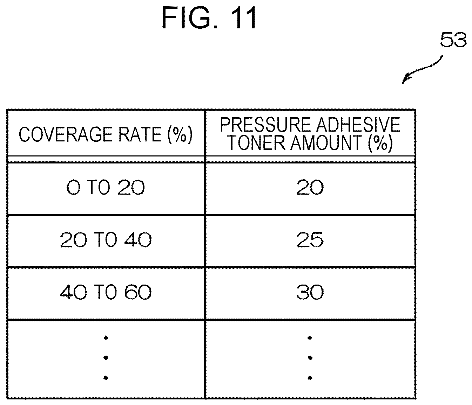

Next, the pressure adhesive toner amount database 53B according to the present exemplary embodiment will be described with reference to Fig. 11. Fig. 11 is a schematic diagram illustrating an example configuration of the pressure adhesive toner amount database 53B according to the present exemplary embodiment.

The pressure adhesive toner amount database 53B according to the present exemplary embodiment is a database that stores information for deriving the amount of the pressure adhesive toner layer in a stepwise manner such that the amount of the pressure adhesive toner layer increases as the coverage rate increases. As an example, as illustrated in Fig. 11, the pressure adhesive toner amount database 53B according to the present exemplary embodiment stores coverage rates and pressure adhesive toner amounts in association with each other.

The coverage rates are information indicating the levels of the coverage rate. As described above, the present exemplary embodiment uses the coverage rate expressed in five levels, from 0% to 100%, in 20% increments. The pressure adhesive toner amounts are information indicating the amounts of pressure adhesive toner to be used to form images corresponding to the respective levels of the coverage rate. In the following, the amount of pressure adhesive toner is referred to as a "pressure adhesive toner amount". The pressure adhesive toner amount is the ratio (expressed as a percentage) of an actual pressure adhesive toner amount to a predetermined maximum amount. However, it is to be understood that this is not limited thereto.

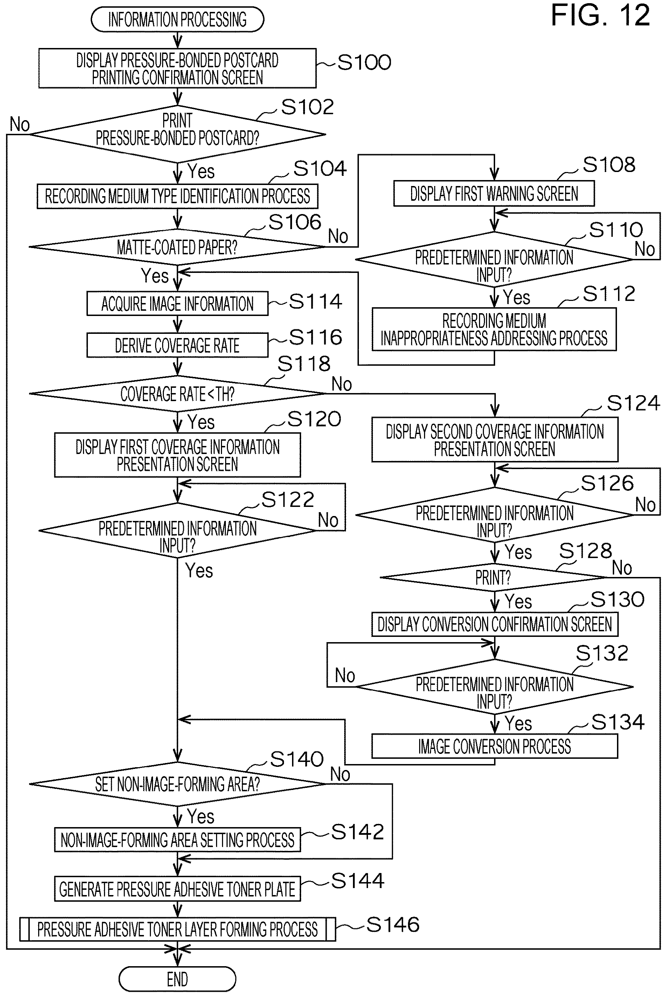

Next, the operation of the information processing device 50 according to the present exemplary embodiment will be described with reference to Fig. 12. Fig. 12 is a flowchart illustrating an example procedure of information processing according to the present exemplary embodiment. The information processing according to the present exemplary embodiment is executed in response to an instruction given from a user via a user terminal (not illustrated) to form (or print) an image using the image forming system 100. To avoid complexity, a case where the pressure adhesive toner amount database 53B has been constructed will be described. Further, description of a process related to the image forming process itself will be omitted in order to avoid complexity.

In step S100, the CPU 51 performs control to cause the display unit 55 to display a pressure-bonded postcard printing confirmation screen having a predetermined configuration. Fig. 13 is a diagram illustrating an example of a pressure-bonded postcard printing confirmation screen according to the present exemplary embodiment.

As illustrated in Fig. 13, the pressure-bonded postcard printing confirmation screen according to the present exemplary embodiment displays a selection area 55A, which is designated for printing a pressure-bonded postcard. In response to the pressure-bonded postcard printing confirmation screen illustrated in Fig. 13 being displayed on the display unit 55, if the user desires to print a pressure-bonded postcard, the user designates the selection area 55A via the input unit 54 and then designates an End button 55G. On the other hand, if the user does not desire to print a pressure-bonded postcard, the user designates only the End button 55G via the input unit 54. In response to the End button 55G being designated by the user, the process proceeds to step S102.

In step S102, the CPU 51 determines whether the selection area 55A has been designated by the user. If the determination is affirmative, the process proceeds to step S104. If the determination in step S102 is negative, it is determined that the user desires to perform normal printing without printing a pressure-bonded postcard. Then, the information processing ends.

In step S104, as described above, the CPU 51 executes a process for identifying the type of the recording medium P to be used. As described above, the CPU 51 causes the user to designate the type of the recording medium P to identify the type. In step S106, the CPU 51 determines whether the identified type is matte-coated paper. If the determination is affirmative, the process proceeds to step S114. On the other hand, if the determination in step S106 is negative, the process proceeds to step S108.

In step S108, the CPU 51 performs control to cause the display unit 55 to display a first warning screen having a predetermined configuration. In step S110, the CPU 51 waits until predetermined information is input. Fig. 14 is a diagram illustrating an example of the first warning screen according to the present exemplary embodiment.

As illustrated in Fig. 14, the first warning screen according to the present exemplary embodiment displays a message indicating that the recording medium P to be used is inappropriate. In response to the first warning screen illustrated in Fig. 14 being displayed on the display unit 55, the user understands the displayed content and then designates the End button 55G via the input unit 54. In response to the End button 55G being designated by the user, the determination in step S110 becomes affirmative. Then, the process proceeds to step S112.

In step S112, the CPU 51 executes a recording medium inappropriateness addressing process, which is determined in advance as a process performed when the recording medium P is inappropriate. Then, the process proceeds to step S114.

In the present exemplary embodiment, the recording medium inappropriateness addressing process includes the following process.

First, the CPU 51 determines whether any accommodation unit accommodates matte-coated paper. If an accommodation unit accommodates matte-coated paper, the CPU 51 performs setting to use a recording medium P accommodated in the accommodation unit.

On the other hand, if no accommodation unit accommodates matte-coated paper, the CPU 51 performs a process for presenting the second warning information described above.

In the present exemplary embodiment, the process for presenting the second warning information involves performing control to cause the display unit 55 to display a second warning screen having a predetermined configuration. Fig. 15 is a diagram illustrating an example of the second warning screen according to the present exemplary embodiment.

As illustrated in Fig. 15, the second warning screen according to the present exemplary embodiment displays a message that provides an instruction to accommodate matte-coated paper in any of the accommodation units. In response to the display of the message, the user accommodates matte-coated paper in any of the accommodation units, and then designates the End button 55G via the input unit 54.

In response to the End button 55G being designated, the CPU 51 identifies the accommodation unit in which matte-coated paper has been accommodated by the user. Then, the CPU 51 performs setting to use a recording medium P accommodated in the identified accommodation unit.

In step S114, the CPU 51 acquires image information received from the user terminal. In step S116, the CPU 51 analyzes the acquired image information to derive the coverage rate in the way as described above.

In step S118, the CPU 51 determines whether the derived coverage rate is less than a threshold TH (in the present exemplary embodiment, 82%). If the determination becomes affirmative, the process proceeds to step S120.

In step S120, the CPU 51 performs control to cause the display unit 55 to display a first coverage information presentation screen having a predetermined configuration. In step S122, the CPU 51 waits until predetermined information is input. Fig. 16 is a diagram illustrating an example of the first coverage information presentation screen according to the present exemplary embodiment.

As illustrated in Fig. 16, the first coverage information presentation screen according to the present exemplary embodiment displays a message indicating that the coverage rate is appropriate for printing of pressure-bonded postcards, together with the derived coverage rate. In response to the first coverage information presentation screen illustrated in Fig. 16 being displayed on the display unit 55, the user understands the displayed content and then designates the End button 55G via the input unit 54. In response to the End button 55G being designated by the user, the determination in step S122 becomes affirmative. Then, the process proceeds to step S140.

On the other hand, if the determination in step S118 is negative, the process proceeds to step S124.

In step S124, the CPU 51 performs control to cause the display unit 55 to display a second coverage information presentation screen having a predetermined configuration. In step S126, the CPU 51 waits until predetermined information is input. Fig. 17 is a diagram illustrating an example of the second coverage information presentation screen according to the present exemplary embodiment.

As illustrated in Fig. 17, the second coverage information presentation screen according to the present exemplary embodiment displays a message indicating that the coverage rate is inappropriate for printing of pressure-bonded postcards, together with the derived coverage rate. The second coverage information presentation screen further displays a selection area 55B, which is designated for printing a pressure-bonded postcard. In response to the second coverage information presentation screen illustrated in Fig. 17 being displayed on the display unit 55, the user understands the displayed content. Then, if the user desires to print a pressure-bonded postcard, the user designates the selection area 55B via the input unit 54 and then designates the End button 55G. If the user does not desire to print a pressure-bonded postcard, the user designates the End button 55G without designating the selection area 55B. In response to the End button 55G being designated by the user, the determination in step S126 becomes affirmative. Then, the process proceeds to step S128.

In step S128, the CPU 51 determines whether the selection area 55B is designated on the second coverage information presentation screen. If the determination is negative, the information processing ends. On the other hand, if the determination in step S128 is affirmative, the process proceeds to step S130.

In step S130, the CPU 51 performs control to cause the display unit 55 to display a conversion confirmation screen having a predetermined configuration. In step S132, the CPU 51 waits until predetermined information is input. Fig. 18 is a diagram illustrating an example of the conversion confirmation screen according to the present exemplary embodiment.

As illustrated in Fig. 18, the conversion confirmation screen according to the present exemplary embodiment displays a message asking whether to convert the image. The conversion confirmation screen according to the present exemplary embodiment further displays a selection area 55C for designating whether to convert the image. In response to the conversion confirmation screen illustrated in Fig. 18 being displayed on the display unit 55, the user designates the selection area 55C corresponding to the "Convert" option via the input unit 54 if the user desires to convert the image. If the user does not desire to convert the image, the user designates the selection area 55C corresponding to the "Not convert" option via the input unit 54.

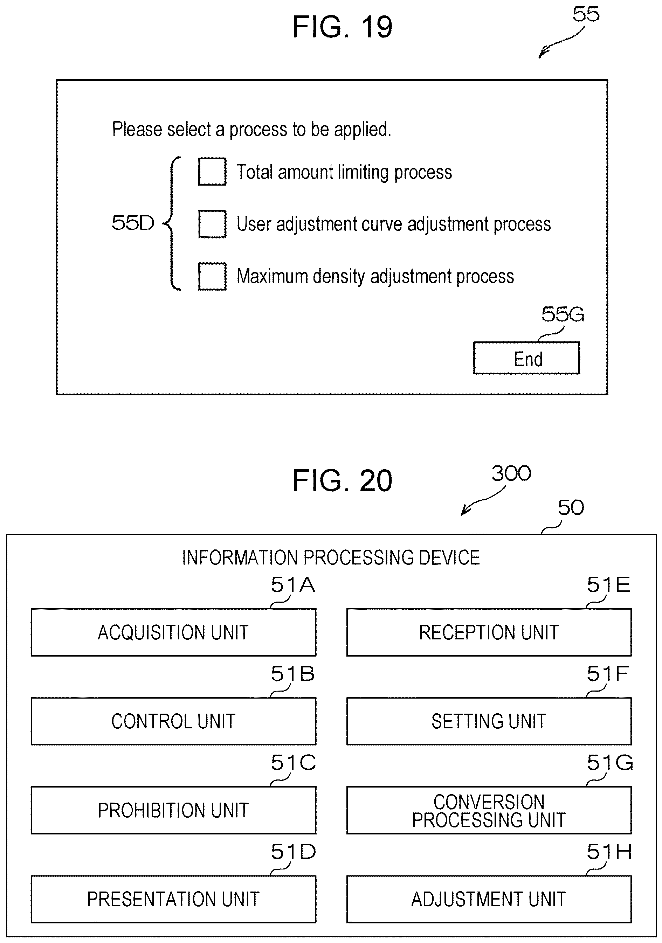

In response to the selection area 55C corresponding to the "Convert" option being designated by the user, the CPU 51 performs control to cause the display unit 55 to display a conversion type selection screen having a predetermined configuration. Fig. 19 is a diagram illustrating an example of the conversion type selection screen according to the present exemplary embodiment.

As illustrated in Fig. 19, the conversion type selection screen according to the present exemplary embodiment displays a message prompting the user to select a process to be applied. The conversion type selection screen further displays a selection area 55D for designating a process to be applied, together with the name of the corresponding process.

In the present exemplary embodiment, three processes, namely, a total amount limiting process, a user adjustment curve adjustment process, and a maximum density adjustment process, are selectable. The total amount limiting process is the above-described process for reducing the total amount of toner. The user adjustment curve adjustment process is the above-described process for changing the user adjustment curve. The maximum density adjustment process is the above-described process for changing the adjustment of the maximum density.

In the present exemplary embodiment, only the above-described processes for which the corresponding constraints are not satisfied are displayed on the conversion type selection screen. Accordingly, the processes selectable by the user are limited to actually effective ones.

In response to the conversion type selection screen illustrated in Fig. 19 being displayed, the user designates the selection area 55D corresponding to a desired one of the processes via the input unit 54 and then designates the End button 55G. In response to the End button 55G being designated by the user, the process proceeds to step S134.

In step S134, the CPU 51 executes the process designated by the user on the conversion type selection screen. Then, the process proceeds to step S140. If the selection area 55C corresponding to the "Not convert" option is designated on the conversion confirmation screen, the process proceeds to step S140 without performing any process in step S134.

In step S140, the CPU 51 analyzes the image information to determine whether to set the non-image-forming area as described above. If the determination is negative, the process proceeds to step S144. If the determination in step S140 is affirmative, the process proceeds to step S142.

In step S142, the CPU 51 executes the process for setting a non-image-forming area as described above.

In step S144, the CPU 51 refers to the information indicating the pressure adhesive toner amount corresponding to the coverage rate in the pressure adhesive toner amount database 53B to identify the final pressure adhesive toner amount. Then, the CPU 51 generates a plate for pressure adhesive toner whose amount is equal to the identified pressure adhesive toner amount and that is used to form an oblique stripe pattern (hereinafter referred to as a "pressure adhesive toner plate"). In the present exemplary embodiment, as described above, the pressure-bonding surface is divided into multiple segmented regions, and the maximum value among the respective coverage rates of the segmented regions is used to determine the pressure adhesive toner amount.

In step S146, the CPU 51 forms a pressure adhesive toner layer using the generated pressure adhesive toner plate. Then, the information processing ends.

### Second Exemplary Embodiment

The first exemplary embodiment describes a case where the pressure adhesive toner amount is set in accordance with the coverage rate. A second exemplary embodiment describes an example in which the pressure adhesive toner amount is adjusted by the user. The overall configuration of the image forming system 100 according to the present exemplary embodiment is similar to that of the image forming system 100 according to the first exemplary embodiment illustrated in Fig. 1. The configuration of the electrical system of the information processing device 50 according to the present exemplary embodiment is also the same as that of the information processing device 50 according to the first exemplary embodiment illustrated in Fig. 2, except that the pressure adhesive toner amount database 53B is not registered.

Accordingly, first, the functional configuration of the information processing device 50 according to the present exemplary embodiment will be described with reference to Fig. 20. Fig. 20 is a block diagram illustrating an example functional configuration of the information processing device 50 according to the present exemplary embodiment. In Fig. 20, the same blocks as those illustrated in Fig. 3 are designated by the same reference numerals as those in Fig. 3, and description thereof will be omitted.

As illustrated in Fig. 20, the information processing device 50 according to the present exemplary embodiment includes an adjustment unit 51H in addition to the acquisition unit 51A, the control unit 51B, the prohibition unit 51C, the presentation unit 51D, the reception unit 51E, the setting unit 51F, and the conversion processing unit 51G.

The reception unit 51E according to the present exemplary embodiment receives an instruction input to adjust the pressure adhesive toner amount to form the pressure adhesive toner layer from the user before the pressure adhesive toner layer is formed on the pressure-bonding surface of the recording medium P. Then, the adjustment unit 51H according to the present exemplary embodiment adjusts the pressure adhesive toner amount in accordance with the instruction input received by the reception unit 51E.

In response to receipt of the instruction input to adjust the pressure adhesive toner amount, the presentation unit 51D presents the coverage rate of the image indicated by the acquired image information with respect to the pressure-bonding surface.

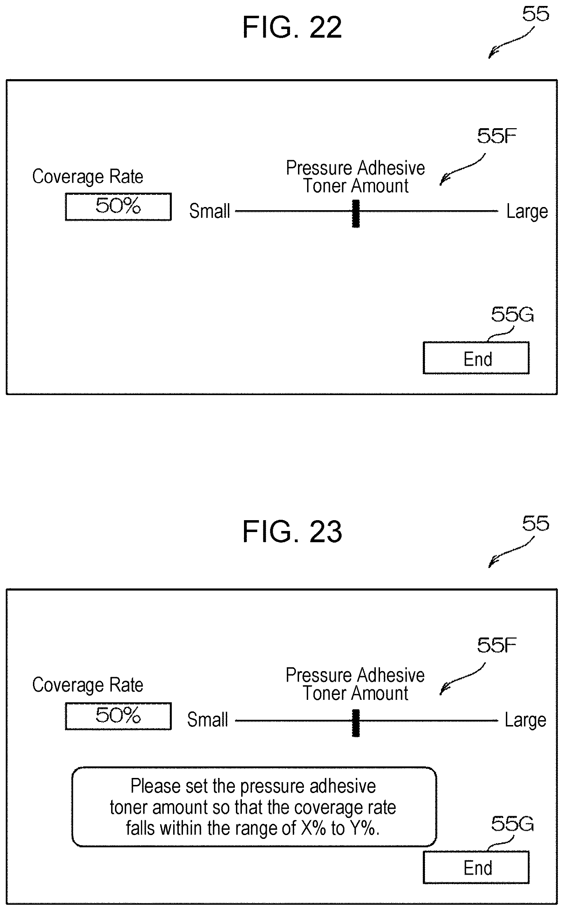

In the present exemplary embodiment, in this case, the presentation unit 51D presents the coverage rate by, as an example, displaying a pressure adhesive toner amount adjustment screen illustrated in Fig. 22. Accordingly, the user adjusts the pressure adhesive toner amount while referring to the coverage rate.

In particular, the adjustment unit 51H according to the present exemplary embodiment converts the image so that the image matches the pressure adhesive toner amount adjusted in accordance with the instruction input. Then, the presentation unit 51D according to the present exemplary embodiment presents the coverage rate of the image converted by the adjustment unit 51H. Accordingly, the adjusted pressure adhesive toner amount and the coverage rate are associated with each other.

The reception unit 51E according to the present exemplary embodiment limits the coverage rate so that the coverage rate falls within a range from a predetermined lower limit value to a predetermined upper limit value. Further, the reception unit 51E according to the present exemplary embodiment receives an instruction input to adjust the pressure adhesive toner amount within a range from a predetermined lower limit amount to a predetermined upper limit amount.

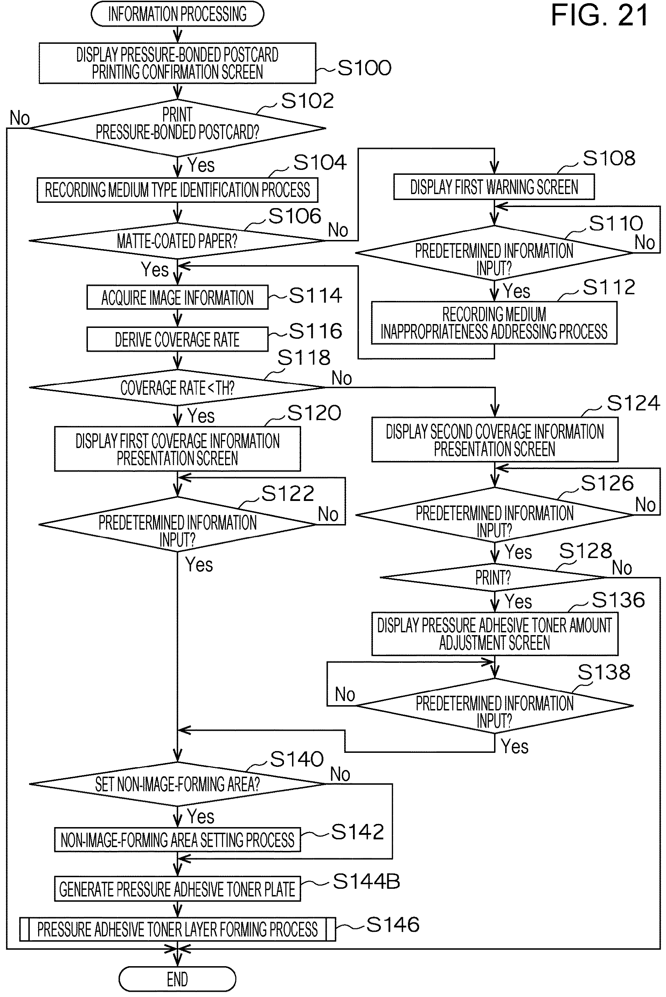

Next, the operation of the information processing device 50 according to the present exemplary embodiment will be described with reference to Fig. 21. Fig. 21 is a flowchart illustrating an example procedure of information processing according to the present exemplary embodiment. In Fig. 21, steps of performing the same processing as that in Fig. 12 are designated by the same step numbers as those in Fig. 12, and description thereof will be omitted.

As illustrated in Fig. 21, the information processing according to the present exemplary embodiment is different from the information processing according to the first exemplary embodiment in that the processing of steps S136 and S138 is applied in place of the processing of steps S130, S132, and S134. The information processing according to the present exemplary embodiment is different from the information processing according to the first exemplary embodiment further in that the processing of step S144B is applied in place of the processing of step S144.

In step S136, the CPU 51 performs control to cause the display unit 55 to display a pressure adhesive toner amount adjustment screen having a predetermined configuration. In step S138, the CPU 51 waits until predetermined information is input. Fig. 22 illustrates an example of a pressure adhesive toner amount adjustment screen according to the present exemplary embodiment.

As illustrated in Fig. 22, the pressure adhesive toner amount adjustment screen according to the present exemplary embodiment displays the derived coverage rate. The pressure adhesive toner amount adjustment screen further displays an adjustment designation area 55F for adjusting the pressure adhesive toner amount.

As illustrated in Fig. 22, in the present exemplary embodiment, a slider is displayed as the adjustment designation area 55F, by way of example, but not limitation. For example, the user may be prompted to directly input a numerical value of the adjusted pressure adhesive toner amount.

In response to the pressure adhesive toner amount adjustment screen illustrated in Fig. 22 being displayed on the display unit 55, the user adjusts the pressure adhesive toner amount using the adjustment designation area 55F via the input unit 54. At this time, as described above, the CPU 51 receives, from the user, an instruction input to adjust the pressure adhesive toner amount within the range from the predetermined lower limit amount to the predetermined upper limit amount. At this time, the CPU 51 limits the coverage rate so that the coverage rate falls within the range from the predetermined lower limit value to the predetermined upper limit value. Accordingly, as an example, as illustrated in Fig. 23, the pressure adhesive toner amount adjustment screen may display the lower limit value and the upper limit value of the coverage rate.

In response to the user adjusting the pressure adhesive toner amount, as described above, the CPU 51 converts the image so that the image matches the adjusted pressure adhesive toner amount. Then, the CPU 51 derives the coverage rate based on the converted image, and updates the displayed coverage rate to the derived coverage rate. At this time, the CPU 51 converts the image so that the derived coverage rate falls within the range from the lower limit amount to the upper limit amount described above.

As described above, in the present exemplary embodiment, the coverage rate displayed on the pressure adhesive toner amount adjustment screen is associated with the pressure adhesive toner amount designated by the user. This allows the user to more accurately adjust the pressure adhesive toner amount.

In response to the completion of the adjustment of the pressure adhesive toner amount, the user designates the End button 55G via the input unit 54. In response to the End button 55G being designated by the user, the determination in step S138 becomes affirmative. Then, the process proceeds to step S140.

After that, in step S144B, the CPU 51 generates a pressure adhesive toner plate so that the pressure adhesive toner amount adjusted by the user is achieved.

In the exemplary embodiment described above, the pressure adhesive toner plate is generated so that the pressure adhesive toner layer has a uniform thickness across the entire surface, by way of example, but not limitation. In an exemplary embodiment, for example, the pressure adhesive toner plate may be generated so that the thickness of the pressure adhesive toner layer varies according to the distribution of the coverage rates of the image formed on the pressure-bonding surface.

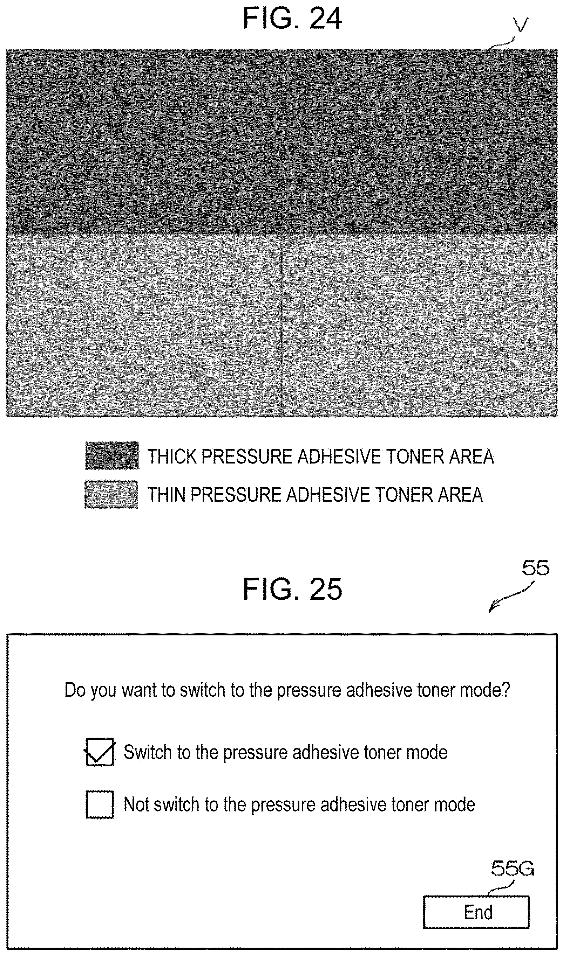

Fig. 24 illustrates an example of a pressure adhesive toner plate V according to this exemplary embodiment when the image to be formed on the pressure-bonding surface corresponds to the image illustrated in the right portion of Fig. 5. In the example illustrated in Fig. 24, the formation of the oblique stripe pattern is omitted. With this configuration, a lower pressure-bonding strength area has a thicker pressure adhesive toner layer, resulting in more rational formation of the pressure adhesive toner layer.

The various screens described in the exemplary embodiments described above are merely examples, and other screens may be displayed. For example, as an example, a pressure adhesive toner mode transition confirmation screen illustrated in Fig. 25 may be displayed to confirm whether to transition to a pressure adhesive toner mode, which is an operation mode using pressure adhesive toner. The pressure adhesive toner mode transition confirmation screen allows the user to designate whether to transition to the pressure adhesive toner mode.

In the exemplary embodiments described above, when the coverage rate is greater than or equal to a predetermined upper limit threshold (in the exemplary embodiments described above, 82%), whether to produce a pressure-bonded postcard is determined in accordance with an instruction from the user, by way of example, but not limitation. For example, the production of a pressure-bonded postcard may be forcibly stopped when the coverage rate exceeds the upper limit threshold.

In the exemplary embodiments described above, furthermore, the image forming system 100 produces a pressure-bonded postcard, by way of example, but not limitation. For example, the image forming system 100 may produce a pressure-bonded envelope.

In the exemplary embodiments described above, furthermore, the information processing is executed by the information processing device 50, by way of example, but not limitation. For example, the information processing may be executed by the pressure-bonding apparatus 200. Alternatively, for example, the information processing may be executed by a device other than the information processing device 50 in the image forming apparatus 300. Alternatively, the information processing may be executed by the pressure-bonding apparatus 200 and the image forming apparatus 300 in a shared manner.

In the exemplary embodiments described above, furthermore, the pressure adhesive toner amount database 53B is registered in the information processing device 50, by way of example, but not limitation. For example, the pressure adhesive toner amount database 53B may be registered in the pressure-bonding apparatus 200. Alternatively, for example, the pressure adhesive toner amount database 53B may be registered in a device other than the information processing device 50 in the image forming apparatus 300.

In the exemplary embodiments described above, furthermore, various screens are displayed on the display unit 55 of the information processing device 50, by way of example, but not limitation. For example, the pressure-bonding apparatus 200 may display the various screens described above. Alternatively, for example, a device other than the information processing device 50 in the image forming apparatus 300 may display the various screens described above.

In the exemplary embodiments described above, furthermore, a color image is applied as an image in the technology of the present disclosure, by way of example, but not limitation. For example, a monochrome image may be applied as an image in the technology of the present disclosure.

In the exemplary embodiments described above, furthermore, a CMYK color image is applied as a color image in the technology of the present disclosure, by way of example, but not limitation. For example, a color image of CMYK and spot colors may be applied as a color image in the technology of the present disclosure. The spot colors refer to, for example, gold, silver, white, pink, orange, violet, green, and custom red.

While some exemplary embodiments have been described above, the technical scope of the present disclosure is not limited to the scope defined in the exemplary embodiments described above. Various modifications or improvements may be made to the exemplary embodiments described above without departing from the gist of the disclosure, and such modifications or improvements are also encompassed by the technical scope of the disclosure.

In addition, the exemplary embodiments described above do not limit the disclosure as defined by the appended claims, and not all combinations of features described in the exemplary embodiments are required for the solutions of the disclosure. The exemplary embodiments described above include aspects of the disclosure, and various aspects of the disclosure are extracted by combining multiple features disclosed herein. In an exemplary embodiment, some of the features illustrated in the exemplary embodiments may be deleted as long as effects are obtained.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content. The program disclosed herein may be provided as a program product.

It is to be understood that the configurations of the image forming system 100, the pressure-bonding apparatus 200, and the image forming apparatus 300 described in the foregoing exemplary embodiments are for exemplary purposes only and a portion may be added to or deleted from the configurations without departing from the scope of the present disclosure.

It is also to be understood that the configurations of the various screens described in the foregoing exemplary embodiments are also for exemplary purposes only and a portion may be added to or deleted from the screens or the layout may be changed on the screens without departing from the scope of the present disclosure.

It is further to be understood that the procedures of information processing described in the foregoing exemplary embodiments are also for exemplary purposes only and a step may be added to or deleted from the information processing or the processing order may be changed in the information processing without departing from the scope of the present disclosure.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix 1

(((1))) An information processing system comprising:
   a processor configured to:
   acquire image information indicating an image of an image portion, the image being an image to be formed on a recording medium, the recording medium having a surface defining the image portion and a pressure adhesive toner layer, the recording medium being folded and pressure-bonded with the surface acting as a pressure-bonding surface or the surface of the recording medium acting as the pressure-bonding surface and being overlaid and pressure-bonded to another recording medium; and
   perform control to form the pressure adhesive toner layer on the pressure-bonding surface in an amount corresponding to a coverage amount of the image indicated by the acquired image information with respect to the pressure-bonding surface.
(((2))) The information processing system according to (((1))), wherein the processor is configured to perform control to form the pressure adhesive toner layer on the pressure-bonding surface such that an amount of the pressure adhesive toner layer increases as a coverage rate of the image with respect to the pressure-bonding surface increases.
(((3))) The information processing system according to (((2))), wherein the processor is configured to prohibit execution of the control to form the pressure adhesive toner layer when the coverage rate is greater than or equal to a predetermined threshold.
(((4))) The information processing system according to (((3))), wherein the predetermined threshold is 82%.
(((5))) The information processing system according to any one of (((2))) to (((4))), wherein the processor is configured to apply, as the coverage rate, a coverage rate determined in accordance with an overlap of the image on the recording medium that is folded, in a case where the recording medium is folded and pressure-bonded with the surface acting as the pressure-bonding surface.
(((6))) The information processing system according to any one of (((2))) to (((5))), wherein the processor is configured to derive the amount of the pressure adhesive toner layer in a stepwise manner such that the amount of the pressure adhesive toner layer increases as the coverage rate increases.
(((7))) The information processing system according to any one of (((2))) to (((5))), wherein the processor is configured to derive the amount of the pressure adhesive toner layer in a stepless manner such that the amount of the pressure adhesive toner layer increases as the coverage rate increases.
(((8))) The information processing system according to any one of (((1))) to (((7))), wherein the image is an image to be formed with toner.
(((9))) The information processing system according to any one of (((1))) to (((8))), wherein the processor is configured to identify a folding position at which the recording medium is folded, using at least one of a region in which the image is to be formed, a position of a registration mark, and a position of a straight line on the recording medium, in a case where the recording medium is folded and pressure-bonded with the surface acting as the pressure-bonding surface.
(((10))) The information processing system according to any one of (((1))) to (((9))), wherein the processor is configured to perform control to form an oblique stripe pattern using toner that is the same as the pressure adhesive toner layer within a range of a predetermined distance from an outer peripheral portion of the pressure-bonding surface.
(((11))) The information processing system according to (((10))), wherein the predetermined distance is 1.5 mm.
(((12))) The information processing system according to any one of (((1))) to (((11))), wherein the image is a color image.
(((13))) A program causing a computer to execute a process for information processing, the process comprising:
   acquiring image information indicating an image of an image portion, the image being an image to be formed on a recording medium, the recording medium having a surface defining the image portion and a pressure adhesive toner layer, the recording medium being folded and pressure-bonded with the surface acting as a pressure-bonding surface or the surface of the recording medium acting as the pressure-bonding surface and being overlaid and pressure-bonded to another recording medium; and
   performing control to form the pressure adhesive toner layer on the pressure-bonding surface in an amount corresponding to a coverage amount of the image indicated by the acquired image information with respect to the pressure-bonding surface.

According to (((1))) and (((13))), it is possible to provide further improved pressure-bonding performance on a pressure-bonding surface of a recording medium compared to a case where the coverage of an image with respect to the pressure-bonding surface is not taken into account.

According to (((2))), it is possible to form a more appropriate amount of the pressure adhesive toner layer compared to a case where the coverage rate is not taken into account.

According to (((3))), it is possible to avoid the unnecessary formation of the pressure adhesive toner layer in advance.

According to (((4))), it is possible to avoid the unnecessary formation of the pressure adhesive toner layer in advance when the coverage rate is greater than or equal to 82%.

According to (((5))), it is possible to more appropriately form the pressure adhesive toner layer than in a case where the overlap of the image on the folded recording medium is not taken into account.

According to (((6))), it is possible to perform the control of forming the pressure adhesive toner layer more easily than in a case where the amount of the pressure adhesive toner layer is derived in a stepless manner.

According to (((7))), it is possible to perform the control of forming the pressure adhesive toner layer more accurately than in a case where the amount of the pressure adhesive toner layer is derived in a stepwise manner.

According to (((8))), it is possible to form the pressure adhesive toner layer on the pressure-bonding surface by using a function similar to a function of forming an image.

According to (((9))), it is possible to identify the position at which the recording medium is folded, by using information used in the related art.

According to (((10))), it is possible to prevent or reduce edge tearing caused by peeling apart of the printed surfaces of the printed material.

According to (((11))), it is possible to more reliably prevent or reduce edge tearing than in a case where the predetermined distance is less than 1.5 mm, and it is possible to prevent or reduce the occurrence of a portion with excessively low pressure-bonding strength, making the printed material less likely to peel off from the edge, compared to a case where the predetermined distance exceeds 1.5 mm.

According to (((12))), it is possible to obtain the effect of the technology of the present disclosure when forming a color image.

### Appendix 2

(((1))) An information processing system comprising:
   a processor configured to:
   acquire image information indicating an image of an image portion, the image being an image to be formed on a recording medium, the recording medium having a surface defining the image portion and a pressure adhesive toner layer, the recording medium being folded and pressure-bonded with the surface acting as a pressure-bonding surface or the surface of the recording medium acting as the pressure-bonding surface and being overlaid and pressure-bonded to another recording medium; and
   present coverage rate information related to a coverage rate of the image indicated by the acquired image information with respect to the pressure-bonding surface.
(((2))) The information processing system according to (((1))), wherein the processor is configured to apply, as the coverage rate, a coverage rate determined in accordance with an overlap of the image on the recording medium that is folded, in a case where the recording medium is folded and pressure-bonded with the surface acting as the pressure-bonding surface.
(((3))) The information processing system according to (((2))), wherein the processor is configured to identify a folding position at which the recording medium is folded, using at least one of a region in which the image is to be formed, a position of a registration mark, and a position of a straight line on the recording medium.
(((4))) The information processing system according to any one of (((1))) to (((3))), wherein the processor is configured to present the coverage rate as the coverage rate information.
(((5))) The information processing system according to any one of (((1))) to (((4))), wherein the processor is configured to receive instruction information for providing an instruction to determine whether to fold and pressure-bond the recording medium with the surface acting as the pressure-bonding surface.
(((6))) The information processing system according to any one of (((1))) to (((5))), wherein the processor is configured to change content of the coverage rate information depending on whether the coverage rate is greater than or equal to a threshold determined in advance.
(((7))) The information processing system according to (((6))), wherein
   when the coverage rate is greater than or equal to the threshold, the coverage rate information includes information indicating that the image has a problem, and
   when the coverage rate is less than the threshold, the coverage rate information includes information indicating that the image has no problem.
(((8))) The information processing system according to any one of (((1))) to (((7))), wherein the image is an image to be formed with toner.
(((9))) The information processing system according to any one of (((1))) to (((8))), wherein the image is a color image.
(((10))) A program causing a computer to execute a process for information processing, the process comprising:
   acquiring image information indicating an image of an image portion, the image being an image to be formed on a recording medium, the recording medium having a surface defining the image portion and a pressure adhesive toner layer, the recording medium being folded and pressure-bonded with the surface acting as a pressure-bonding surface or the surface of the recording medium acting as the pressure-bonding surface and being overlaid and pressure-bonded to another recording medium; and
   presenting coverage rate information related to a coverage rate of the image indicated by the acquired image information with respect to the pressure-bonding surface.

According to (((1))) and (((10))), it is possible to determine the appropriateness of an image of an image portion more easily than in a case where the coverage rate information is not presented.

According to (((2))), it is possible to apply a more appropriate coverage rate than in a case where the overlap of the image on the folded recording medium is not taken into account.

According to (((3))), it is possible to identify the position at which the recording medium is folded, by using information used in the related art.

According to (((4))), it is possible to help the user understand the coverage rate.

According to (((5))), it is possible to designate whether to create a printed material in which a recording medium is folded and pressure-bonded, in accordance with an instruction from the user.

According to (((6))), it is possible to present information corresponding to the coverage rate to the user.

According to (((7))), it is possible to present appropriate information corresponding to the coverage rate to the user.

According to (((8))), it is possible to form the pressure adhesive toner layer on the pressure-bonding surface by using a function similar to a function of forming an image.

According to (((9))), it is possible to obtain the effect of the technology of the present disclosure when forming a color image.

## Claims

1. An information processing system comprising:
a processor configured to:
acquire image information indicating an image of an image portion, the image being an image to be formed on a recording medium, the recording medium having a surface defining the image portion and a pressure adhesive toner layer, the recording medium being folded and pressure-bonded with the surface acting as a pressure-bonding surface or the surface of the recording medium acting as the pressure-bonding surface and being overlaid and pressure-bonded to another recording medium; and
perform control to form the pressure adhesive toner layer on the pressure-bonding surface in an amount corresponding to a coverage amount of the image indicated by the acquired image information with respect to the pressure-bonding surface.

2. The information processing system according to claim 1, wherein the processor is configured to perform control to form the pressure adhesive toner layer on the pressure-bonding surface such that an amount of the pressure adhesive toner layer increases as a coverage rate of the image with respect to the pressure-bonding surface increases.

3. The information processing system according to claim 2, wherein the processor is configured to prohibit execution of the control to form the pressure adhesive toner layer when the coverage rate is greater than or equal to a predetermined threshold.

4. The information processing system according to claim 3, wherein the predetermined threshold is 82%.

5. The information processing system according to any one of claims 2 to 4, wherein the processor is configured to apply, as the coverage rate, a coverage rate determined in accordance with an overlap of the image on the recording medium that is folded, in a case where the recording medium is folded and pressure-bonded with the surface acting as the pressure-bonding surface.

6. The information processing system according to any one of claims 2 to 5, wherein the processor is configured to derive the amount of the pressure adhesive toner layer in a stepwise manner such that the amount of the pressure adhesive toner layer increases as the coverage rate increases.

7. The information processing system according to any one of claims 2 to 5, wherein the processor is configured to derive the amount of the pressure adhesive toner layer in a stepless manner such that the amount of the pressure adhesive toner layer increases as the coverage rate increases.

8. The information processing system according to any one of claims 1 to 7, wherein the image is an image to be formed with toner.

9. The information processing system according to any one of claims 1 to 8, wherein the processor is configured to identify a folding position at which the recording medium is folded, using at least one of a region in which the image is to be formed, a position of a registration mark, and a position of a straight line on the recording medium, in a case where the recording medium is folded and pressure-bonded with the surface acting as the pressure-bonding surface.

10. The information processing system according to any one of claims 1 to 9, wherein the processor is configured to perform control to form an oblique stripe pattern using toner that is the same as the pressure adhesive toner layer within a range of a predetermined distance from an outer peripheral portion of the pressure-bonding surface.

11. The information processing system according to claim 10, wherein the predetermined distance is 1.5 mm.

12. The information processing system according to any one of claims 1 to 11, wherein the image is a color image.

13. A program causing a computer to execute a process for information processing, the process comprising:
acquiring image information indicating an image of an image portion, the image being an image to be formed on a recording medium, the recording medium having a surface defining the image portion and a pressure adhesive toner layer, the recording medium being folded and pressure-bonded with the surface acting as a pressure-bonding surface or the surface of the recording medium acting as the pressure-bonding surface and being overlaid and pressure-bonded to another recording medium; and
performing control to form the pressure adhesive toner layer on the pressure-bonding surface in an amount corresponding to a coverage amount of the image indicated by the acquired image information with respect to the pressure-bonding surface.

14. An information processing system comprising:
a processor configured to:
acquire image information indicating an image of an image portion, the image being an image to be formed on a recording medium, the recording medium having a surface defining the image portion and a pressure adhesive toner layer, the recording medium being folded and pressure-bonded with the surface acting as a pressure-bonding surface or the surface of the recording medium acting as the pressure-bonding surface and being overlaid and pressure-bonded to another recording medium; and
present coverage rate information related to a coverage rate of the image indicated by the acquired image information with respect to the pressure-bonding surface.

15. The information processing system according to claim 14, wherein the processor is configured to apply, as the coverage rate, a coverage rate determined in accordance with an overlap of the image on the recording medium that is folded, in a case where the recording medium is folded and pressure-bonded with the surface acting as the pressure-bonding surface.

16. The information processing system according to claim 15, wherein the processor is configured to identify a folding position at which the recording medium is folded, using at least one of a region in which the image is to be formed, a position of a registration mark, and a position of a straight line on the recording medium.

17. The information processing system according to any one of claims 14 to 16, wherein the processor is configured to present the coverage rate as the coverage rate information.

18. The information processing system according to any one of claims 14 to 17, wherein the processor is configured to receive instruction information for providing an instruction to determine whether to fold and pressure-bond the recording medium with the surface acting as the pressure-bonding surface.

19. The information processing system according to any one of claims 14 to 18, wherein the processor is configured to change content of the coverage rate information depending on whether the coverage rate is greater than or equal to a threshold determined in advance.

20. The information processing system according to claim 19, wherein
when the coverage rate is greater than or equal to the threshold, the coverage rate information includes information indicating that the image has a problem, and
when the coverage rate is less than the threshold, the coverage rate information includes information indicating that the image has no problem.

21. The information processing system according to any one of claims 14 to 20, wherein the image is an image to be formed with toner.

22. The information processing system according to any one of claims 14 to 21, wherein the image is a color image.

23. A program causing a computer to execute a process for information processing, the process comprising:
acquiring image information indicating an image of an image portion, the image being an image to be formed on a recording medium, the recording medium having a surface defining the image portion and a pressure adhesive toner layer, the recording medium being folded and pressure-bonded with the surface acting as a pressure-bonding surface or the surface of the recording medium acting as the pressure-bonding surface and being overlaid and pressure-bonded to another recording medium; and
presenting coverage rate information related to a coverage rate of the image indicated by the acquired image information with respect to the pressure-bonding surface.
